# EUROPEAN PATENT APPLICATION

(11) **EP 4 851 692 A1**
(43) Date of publication of application: **09.12.2026**
(21) Application number: 25748249.7
(22) Date of filing: 21.01.2025
(51) Int. Cl.: G02B 7/185, G02B 7/183, G02B 7/198, G02B 23/02

(54) **REFLECTING MIRROR DEVICE AND REFLECTING MIRROR SURFACE ADJUSTING SYSTEM**

(30) Priority: 30.01.2024 JP 2024011506
(71) Applicant: Mitsubishi Electric Corporation, Tokyo 100-8310 (JP)
(72) Inventor: HATTORI, Tomoya, Tokyo 100-8310 (JP); KAWAGUCHI, Noboru, Tokyo 100-8310 (JP); YAMASAKI, Katsumi, Tokyo 108-0014 (JP)
(74) Representative: Hoffmann Eitle
(86) International application number: PCT/JP2025/001763
(87) International publication number: WO 2025/164440

(57) **Abstract**

A reflecting mirror device includes: a reflecting mirror (1) including a mirror surface (1A), three supported points (1C) provided on a back surface of the mirror surface (1A), and shape correction points (1D) of a predetermined total number provided on the back surface; a structural member (2) supporting the reflecting mirror; three support units (5) connected to the respective supported points (1C) to support the reflecting mirror (1); and a shape correction unit (6) to change positions of the respective shape correction points (1D) in an optical axis direction of the reflecting mirror (1). The shape correction unit (6) includes a link member (6B) provided so as to be rotatable about a fulcrum (6D) provided on a strut; a rod-shaped member (6A) having a first end connected to the shape correction points (1D) and a second end attached to the link member (6B); and a link drive unit (8) provided, in the link member (6B) on a side opposite to the rod-shaped member (6A) with respect to the fulcrum (6D), at a position at which a distance from the fulcrum (6D) is larger than at the position at which the rod-shaped member (6A) is attached, the link drive unit generating a force for moving the link member (6B) in the optical axis direction.

## Description

### TECHNICAL FIELD

The present disclosure relates to a reflecting mirror device used for a telescope and a reflecting mirror surface adjustment system that adjusts the shape of a mirror surface of a reflecting mirror.

### BACKGROUND ART

A primary mirror of a telescope is rigidly supported so as not to be over-constrained in order to obtain high mirror surface accuracy. Rigidly supporting can prevent an excessive internal force and deformation from occurring inside the primary mirror to increase the mirror surface accuracy of the primary mirror, thus achieving high performance of the telescope. However, even in a rigidly supported primary mirror, minute deformation modes remain. Factors contributing to minute deformation modes remaining in the primary mirror include manufacturing errors of a primary mirror itself, the influence of its own weight, assembly errors, and misalignment with other optical devices during installation.

There is an active mirror support device that compensates for minute deformation modes of a primary mirror by pushing and pulling a plurality of (several tens to several hundreds) points on the back surface of a rigidly supported reflecting mirror using actuators (see, for example, PTL 1). This active mirror support device is used in the Subaru Telescope, which is a large optical telescope with a diameter of 8.2 m installed on the island of Hawaii. In PTL 1, the active mirror support device is used so as to calculate the distortion of the mirror surface due to its own weight without measuring the mirror surface shape, and to compensate for the calculated distortion. A support mechanism included in the active mirror support device linearly pushes and pulls the rear surface of the reflecting mirror.

In order to compensate for deformation of the reflecting mirror due to its own weight, a reflecting mirror support mechanism is provided that includes a plurality of lever mechanisms on the bottom and side surfaces of a reflecting mirror device (see, for example, PTL 2). The lever mechanism is provided with a load shaft supporting a reflecting mirror on one side of an arm supported by a fulcrum, and a weight that balances the weight received by the load shaft from the reflecting mirror on the opposite side of the arm.

There is a reflecting mirror adjustment mechanism that can perform position adjustment of tilt and height of a thin and lightweight reflecting mirror without causing harmful deformation, and that can allow thermal deformation to escape while suppressing the occurrence of thermal stress (see, for example, PTL 3).

### CITATION LIST

### PATENT LITERATURE

PTL 1: Japanese Patent Publication No. H07-034058
PTL 2: Japanese Patent Laying-Open No. H03-068908
PTL 3: Japanese Patent Laying-Open No. 2001-296466

### SUMMARY OF INVENTION

### TECHNICAL PROBLEM

In telescopes used in outer space, a reflecting mirror device that can actively adjust the shape of a mirror surface is desired. If there is a reflecting mirror device that can actively adjust the shape of a mirror surface, the shape of the mirror surface can be made into an intended shape with high accuracy even if, for example, there is a temperature change. By increasing the mirror surface accuracy of the primary mirror, high performance of the telescope can be fully exhibited.

Since the support mechanism included in the active mirror support device of PTL 1 causes linear displacement, it needs to include a drive mechanism capable of generating a force required for displacement. Thus, one support mechanism is heavy. Since the mirror surface accuracy improves as the number of supported points increases, the number of support mechanisms is large so that the required mirror surface accuracy can be realized. Therefore, a reflecting mirror device that can actively adjust the shape of a mirror surface used on the ground is large and heavy. A reflecting mirror device, which has heavy weight, cannot be launched into outer space. This leads to a desire for a reflecting mirror device that is lightweight enough to be launched into outer space and that can adjust the shape of the mirror surface to an intended shape even in outer space.

An object of the present disclosure is to obtain a reflecting mirror device that is more lightweight than conventional ones and that can adjust the shape of a mirror surface to an intended shape even in outer space.

### SOLUTION TO PROBLEM

A reflecting mirror device according to the present disclosure includes: a reflecting mirror including a mirror surface to reflect electromagnetic waves, three supported points provided on a back surface of the mirror surface, and shape correction points of a predetermined total number provided on the back surface; a structural member located on a rear surface side of the reflecting mirror to support the reflecting mirror, the rear surface side being opposite to a side on which the mirror surface is located; three support units provided on the structural member and connected to the respective supported points to support the reflecting mirror; and shape correction units equal in number to the shape correction points, the shape correction units being provided on the structural member to change positions of the respective shape correction points in an optical axis direction that is parallel to an optical axis of the reflecting mirror. Each shape correction unit includes a strut provided on a rear surface of the structural member, the rear surface being opposite to a side on which the reflecting mirror is located, a link member provided so as to be rotatable about a fulcrum provided on the strut, a rod-shaped member having a first end connected to a corresponding one of the shape correction points and a second end attached to the link member, and a link drive unit provided, in the link member on a side opposite to a position at which the rod-shaped member is attached with respect to the fulcrum, at a position at which a distance from the fulcrum is larger than at the position at which the rod-shaped member is attached, the link drive unit generating a force for moving the link member in the optical axis direction.

### ADVANTAGEOUS EFFECTS OF INVENTION

The reflecting mirror device according to the present disclosure can be more lightweight than conventional ones and can adjust the shape of a mirror surface to an intended shape even in outer space.

### BRIEF DESCRIPTION OF DRAWINGS

Fig. 1 is a perspective view of a reflecting mirror device according to Embodiment 1 as viewed from obliquely above.
Fig. 2 is a perspective view of the reflecting mirror device according to Embodiment 1 as viewed from obliquely below.
Fig. 3 is a perspective view of the reflecting mirror device according to Embodiment 1 without a primary mirror, as viewed from obliquely above.
Fig. 4 is a perspective view of actuators and a rear disk member included in the reflecting mirror device according to Embodiment 1 as viewed from obliquely below.
Fig. 5 is a plan view of the reflecting mirror device according to Embodiment 1.
Fig. 6 is a front view of the reflecting mirror device according to Embodiment 1.
Fig. 7 is a bottom view of the reflecting mirror device according to Embodiment 1.
Fig. 8 is a horizontal sectional view of the reflecting mirror device according to Embodiment 1.
Fig. 9 is a bottom view of the reflecting mirror device according to Embodiment 1 without the rear disk member and a rear structural frame.
Fig. 10 is a bottom view showing the arrangement of actuators of the reflecting mirror device according to Embodiment 1.
Fig. 11 is a schematic vertical sectional view of the reflecting mirror device according to Embodiment 1.
Fig. 12 is a schematic sectional view showing an actuator included the reflecting mirror device according to Embodiment 1.
Fig. 13 is a side view of the reflecting mirror device according to Embodiment 1.
Fig. 14 is an enlarged side view of the reflecting mirror device according to Embodiment 1.
Fig. 15 is a bottom view of a shape adjustment actuator included in the reflecting mirror device according to Embodiment 1.
Fig. 16 is a horizontal sectional view of the shape adjustment actuator of the reflecting mirror device according to Embodiment 1.
Fig. 17 is a diagram illustrating a structure of a pivot member of the shape adjustment actuator included in the reflecting mirror device according to Embodiment 1.
Fig. 18 is another side view of the reflecting mirror device according to Embodiment 1.
Fig. 19 is another enlarged side view of the reflecting mirror device according to Embodiment 1.
Fig. 20 is a diagram showing the inside of a support actuator partially broken away in the other enlarged side view of the reflecting mirror device according to Embodiment 1.
Fig. 21 is a diagram showing Zernike modes of a mirror surface.
Fig. 22 is a schematic diagram illustrating a configuration of a reflecting mirror surface adjustment system that adjusts a mirror surface of the reflecting mirror device according to Embodiment 1.
Fig. 23 is a flowchart illustrating a procedure from launch of a telescope including the reflecting mirror device according to Embodiment 1 into outer space until its use for observation.
Fig. 24 is a flowchart illustrating a procedure from installation of a telescope including the reflecting mirror device according to Embodiment 1 on earth until its use for observation.

### DESCRIPTION OF EMBODIMENTS

### Embodiment 1.

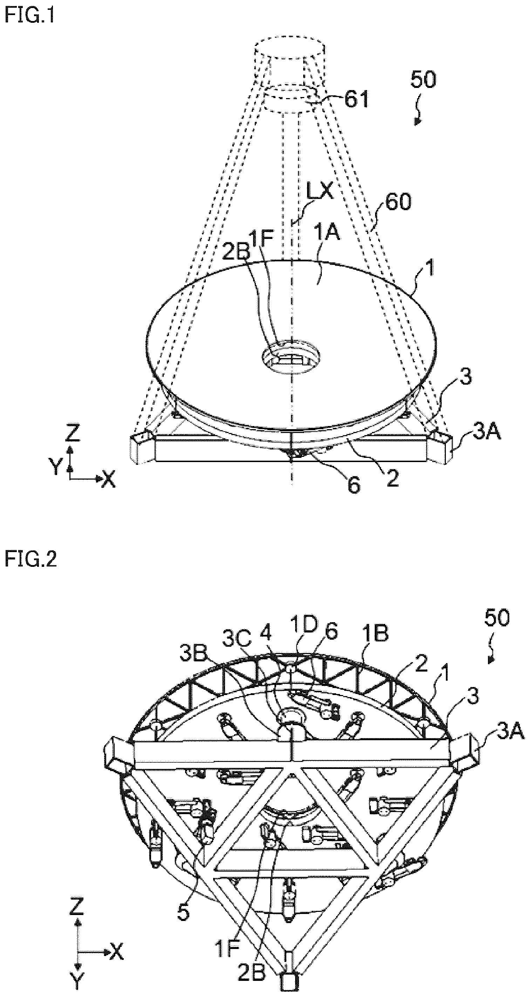

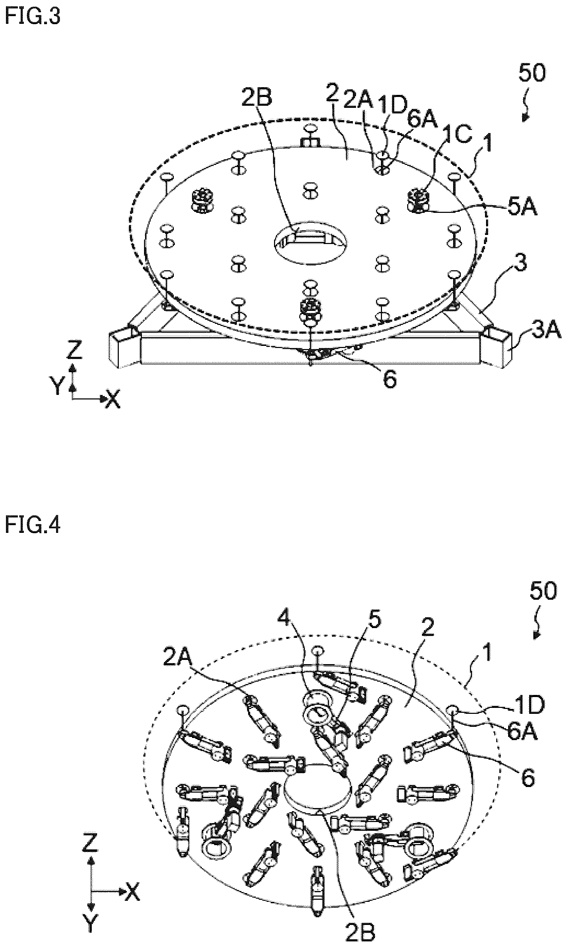

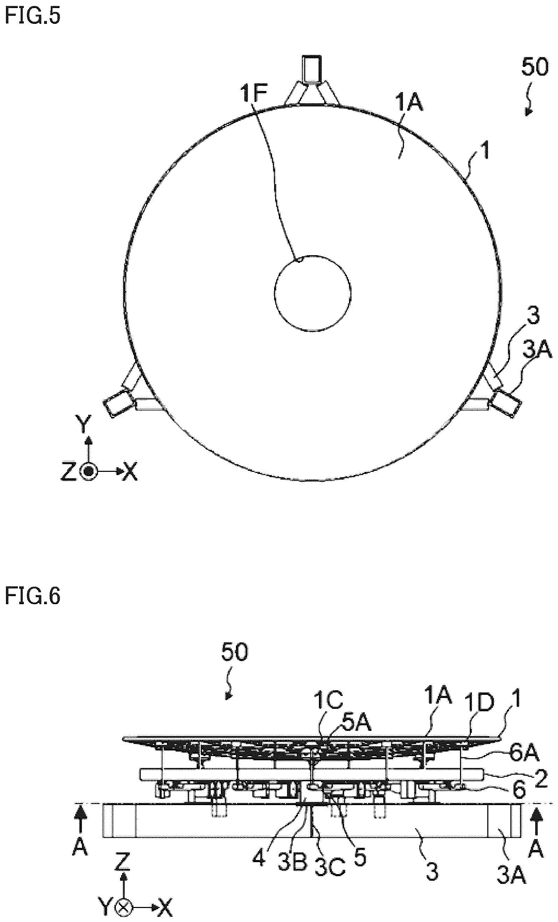

The structure of a reflecting mirror device according to the present disclosure will be described with reference to Figs. 1 to 10. The reflecting mirror device according to the present disclosure is a reflecting mirror device that is a part of a telescope used in outer space. Figs. 1 and 2 are perspective views of a reflecting mirror device according to Embodiment 1 as viewed from obliquely above or obliquely below. Fig. 3 is a perspective view of the reflecting mirror device without a primary mirror, as viewed from obliquely above. Fig. 4 is a perspective view of actuators and a rear disk member of the reflecting mirror device, as viewed from obliquely below. Figs. 5 to 7 are a plan view, a front view, and a bottom view of the reflecting mirror device.

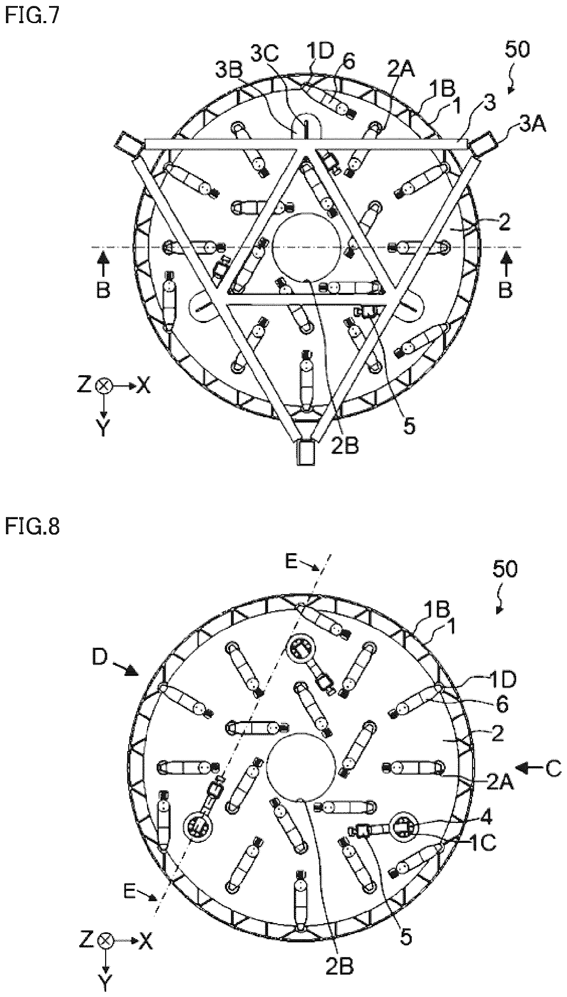

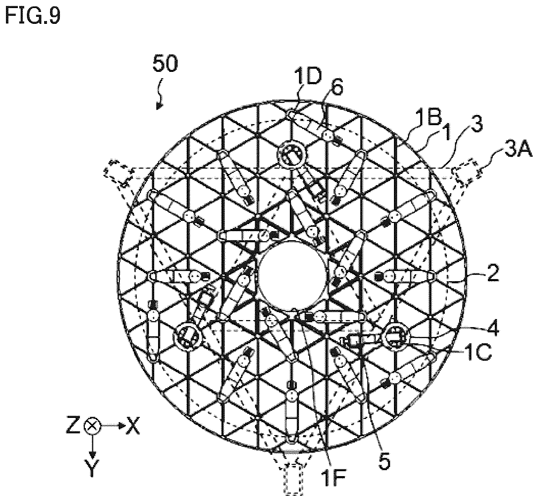

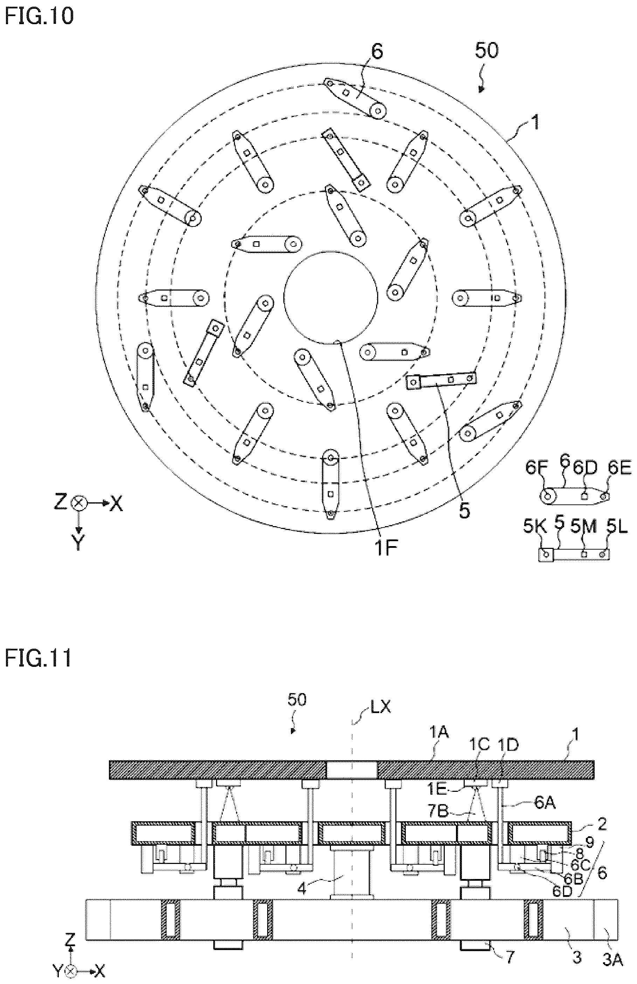

Fig. 8 is a horizontal sectional view of the reflecting mirror device. Fig. 8 is a sectional view taken along the line AA shown in Fig. 6. A section AA is a horizontal section. Fig. 8 is a sectional view of the reflecting mirror device as viewed from below. Fig. 9 is a bottom view of the reflecting mirror device without the rear disk member and a rear structural frame. Fig. 10 is a schematic sectional view of the reflecting mirror device as viewed from the side opposite to the front. Fig. 10 is a bottom view showing the arrangement of actuators of the reflecting mirror device.

A reflecting mirror device 50 according to Embodiment 1 mainly includes a primary mirror 1, a rear disk member 2, a rear structural frame 3, a connecting member 4, a support actuator 5, and a shape correction actuator 6. Primary mirror 1 has a recessed mirror surface 1A that reflects observation light. Rear disk member 2 is a structural member that is located on a rear surface side, which is opposite to a side on which a mirror surface 1A of primary mirror 1 is located and supports primary mirror 1. Rear structural frame 3 is a structural member that is located on the rear surface side of rear disk member 2 and supports rear disk member 2. Connecting member 4 is a cylindrical member having a flange that connects rear disk member 2 to rear structural frame 3. Rear disk member 2, rear structural frame 3, and connecting member 4 may be considered as structural members that support primary mirror 1. In rear disk member 2 and rear structural frame 3, the surface that is opposite to the side on which primary mirror 1 is located is referred to as a rear surface.

Support actuator 5 is an actuator that supports primary mirror 1 and is also used for shape correction of mirror surface 1A. Shape correction actuator 6 is an actuator used for shape correction of mirror surface 1A. Support actuator 5 and shape correction actuator 6 push and pull the back surface of primary mirror 1 using a lever mechanism.

Primary mirror 1 has a circular shape when viewed from an optical axis direction, which is a direction in which an optical axis LX (shown in Figs. 1 and 11) extends. On the back surface of primary mirror 1, as shown in Fig. 9, a rib 1B, three supported points 1C, and 18 shape correction points 1D are provided. A plurality of ribs 1B for reinforcement are provided in each of three directions forming an angle of 60 degrees with each other. In each direction, ribs 1B are provided equidistantly. Ribs 1B in the three directions intersect one another at one point.

A telescope using reflecting mirror device 50 is an optical telescope that uses visible light as observation light. Such a telescope may be a telescope whose observation targets are electromagnetic waves of wavelengths such as infrared light or radio waves. Mirror surface 1A reflects electromagnetic waves to be observed. Supported point 1C is a supported point provided on the back surface of primary mirror 1. Correction points 1D are shape correction points of a predetermined total number provided on the back surface. The number of all correction points 1D is referred to as a total number. In primary mirror 1, the total number is determined to be 18. Primary mirror 1 is a reflecting mirror having mirror surface 1A that reflects electromagnetic waves, three supported points provided on the back surface, which is the surface opposite to mirror surface 1A, and shape correction points of a predetermined total number provided on the back surface.

Support actuator 5 is a support unit provided on the structural member and connected to each supported point to support the reflecting mirror. Shape correction actuator 6 is a shape correction unit provided on the structural member to change the position of each shape correction point in the optical axis direction, which is a direction parallel to optical axis LX of the reflecting mirror. Support actuator 5 is also a shape correction unit. Reflecting mirror device 50 includes three support actuators 5 and 18 shape correction actuators 6 equal in number to shape correction points 1D.

In order to describe the structure of reflecting mirror device 50, an XYZ orthogonal coordinate system is defined. The Z-axis is defined parallel to optical axis LX. The X-axis is defined parallel to one side of a triangle of rear structural frame 3 having an approximately triangular shape when viewed from the optical axis direction. The Y-axis is defined as an axis orthogonal to the X-axis in a plane perpendicular to the Z-axis. The upward direction is the positive direction of the Z-axis, the direction from left to right in Fig. 5 is the positive direction of the X-axis, and the direction from bottom to top is the positive direction of the Y-axis.

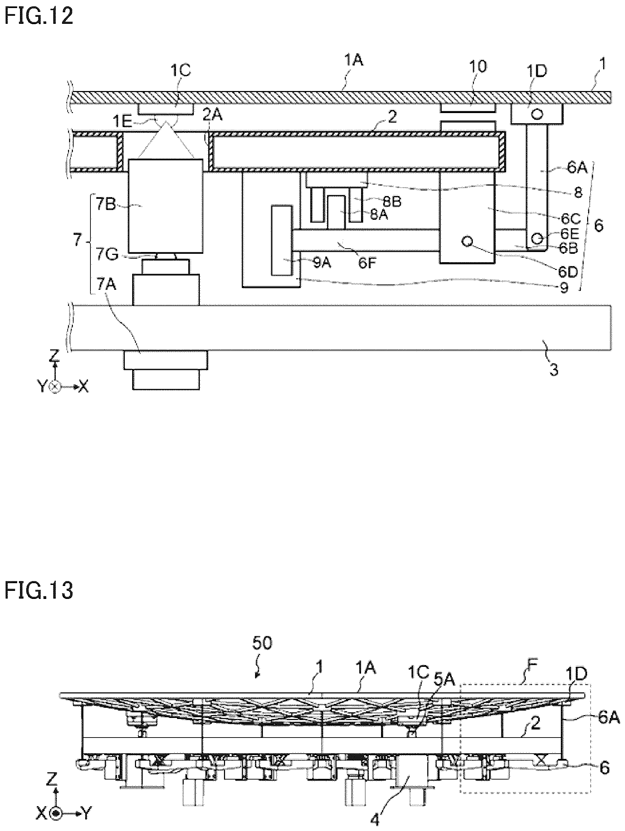

Supported point 1C and correction point 1D are provided at points at which ribs 1B intersect each other. Supported point 1C and correction point 1D are circular when viewed from the optical axis direction. A spherical bearing 1E (shown in Fig. 12) is provided at supported point 1C. Correction point 1D has a plane perpendicular to the optical axis direction. The three supported points 1C are respectively provided at the positions of three vertices of an equilateral triangle such that the center of gravity is at the center of the outer circle of primary mirror 1 (called a mirror surface center).

The 18 correction points 1D are arranged on three circles centered on the mirror surface center, six on each circle, at positions at which straight lines connecting correction points 1D to the mirror surface center form an angle of 60 degrees with each other. The six correction points 1D provided on the outermost circle and the six correction points 1D provided on the innermost circle are arranged at the same angular positions with respect to the mirror surface center. The six correction points 1D provided on the intermediate circle form an angle of 30 degrees with respect to a straight line connecting correction points 1D provided on the outer and inner circles and the mirror surface center, and are arranged at positions at which straight lines connecting correction points 1D to the mirror surface center form an angle of 60 degrees with each other. The three supported points 1C are arranged at positions at which straight lines connecting these supported points 1C to the mirror surface center form an angle of 120 degrees with each other on a circle centered on the mirror surface center. The circle on which supported points 1C are arranged is located between the innermost circle and the intermediate circle on which correction points 1D are arranged. Each of the three supported points 1C is arranged at an angular position at which correction point 1D is located on the outermost and innermost circles.

In reflecting mirror device 50, the total number of correction points 1D is 18. In a plane perpendicular to the optical axis direction, a circle centered on the mirror surface center on which correction points 1D are arranged is referred to as an arrangement circle. The number of arrangement circles is referred to as an arrangement circle number. Each arrangement circle has a different radius. The number of correction points 1D arranged on each arrangement circle is referred to as a same-radius number. In reflecting mirror device 50, the arrangement circle number is 3, and the same-radius number is 6, and the total number of 18 is the product of the arrangement circle number and the same-radius number. The arrangement circle number and the same-radius number are only required to be integers of 2 or more. The number of correction points 1D to be arranged may be different for arrangement circles having different radii.

In each arrangement circle, six correction points 1D are arranged such that straight lines connecting these correction points 1D to the mirror surface center form 60 degrees with each other. In other words, six correction points 1D are arranged with six-fold rotational symmetry. Since the six correction points 1D provided on the intermediate arrangement circle form an angle of 30 degrees with correction points 1D provided on the outer and inner arrangement circles, shape correction point 1D arranged on an arrangement circle having a certain radius is arranged on a bisector of an angle formed by two line segments, connecting the mirror surface center to two shape correction points 1D adjacent in the circumferential direction arranged on arrangement circles adjacent in the radial direction of primary mirror 1, on the mirror surface center.

Each of the three supported points 1C may be arranged at an angular position at which correction point 1D is located in the intermediate arrangement circle. It is sufficient that shape correction point 1D is arranged on each of three straight lines connecting each of the three supported points 1C to the mirror surface center.

When reflecting mirror device 50 is located on Earth, most of the load from primary mirror 1 is supported by three supported points 1C and three support actuators 5. Thus, supported point 1C is larger than correction point 1D. The load of primary mirror 1 is not applied much to correction point 1D and shape correction actuator 6. Shape correction actuator 6 generates a force to move correction point 1D in the optical axis direction. By displacing the three support actuators 5 by the same displacement amount at the same time, primary mirror 1 can be moved as one mass relative to rear disk member 2. By individually displacing support actuators 5, support actuators 5 can be used for shape correction of mirror surface 1A.

Rear disk member 2 has a disk shape with a smaller diameter than that of primary mirror 1. Support actuator 5 and shape correction actuator 6 are attached to rear disk member 2. Rear disk member 2 is provided with a plurality of through holes 2A. A support pillar 5A, which is a member of support actuator 5 connected to supported point 1C, or a rod spring 6A, which is a member of shape correction actuator 6 connected to correction point 1D, passes through each of the plurality of through holes 2A. As shown in Fig. 10 and the like, rear disk member 2 has a hollow structure.

Rear structural frame 3 has a shape in which small equilateral triangles are connected in the opposite directions inside a large equilateral triangle when viewed from the optical axis direction. A frame receiving member 3A is provided at the position of each vertex of the large equilateral triangle. Frame receiving member 3A is a rectangular tube arranged in the optical axis direction. A secondary mirror support frame 60 (shown in Fig. 1) is inserted into frame receiving member 3A. Secondary mirror support frame 60 supports a secondary mirror 61 (shown in Fig. 1). Secondary mirror 61 reflects observation light reflected by primary mirror 1. The observation light reflected by secondary mirror 61 passes through an optical path opening 1F provided at the center of primary mirror 1 and an optical path opening 2B provided at the center of rear disk member 2, and enters an optical instrument (not shown).

When the radius of primary mirror 1 is r_{MR}, the radius of the arrangement circle on which outermost correction points 1D are arranged is about 0.91*r_{MR}. The radius of the arrangement circle on which the six intermediate correction points 1D are arranged in the radial direction is about 0.79*r_{MR}. The radius of the arrangement circle on which the three supported points 1C are arranged is about 0.68*r_{MR}. The radius of the arrangement circle on which innermost correction points 1D are arranged is about 0.45*r_{MR}. The radius of optical path opening 1F is about 0.20*r_{MR}.

Rear structural frame 3 is also a structural member of a telescope including reflecting mirror device 50. The telescope has a frame structure including rear structural frame 3. Rear structural frame 3 is also a member for installing the telescope at an installation point. As shown in Fig. 10, rear structural frame 3 has a hollow structure.

Rear structural frame 3 includes a plate-shaped connection portion 3B having a shape combining a semicircle and a rectangle when viewed from the optical axis direction on the side on which primary mirror 1 is located in the optical axis direction at the center position of the three sides of the large triangle. Ribs 3C for reinforcement are provided on the rear surface side of connection portion 3B. A first end of connecting member 4 is connected to each of the three connection portions 3B. A second end of connecting member 4 is connected to the rear surface of rear disk member 2.

The central axis of cylindrical connecting member 4 is parallel to the optical axis direction. Connecting member 4 connects rear disk member 2 to rear structural frame 3 at a position at which the central axis of cylindrical connecting member 4 passes through the center of supported point 1C. The diameter of a through hole 2A of rear disk member 2 through which support pillar 5A passes is the same as the inner diameter of connecting member 4. Connecting member 4 is connected to the rear surface of rear disk member 2 so that the internal space thereof communicates with through hole 2A.

Each of the three support actuators 5 is attached to rear disk member 2 at a position at which support pillar 5A extending in the optical axis direction is connected to supported point 1C. Connecting member 4 is provided with an opening 4A (a reference sign not shown), and support actuator 5 is provided so as to pass through opening 4A. Support pillar 5A is located inside connecting member 4, and other parts are located outside connecting member 4. Each of the 18 shape correction actuators 6 is attached to rear disk member 2 at a position at which rod spring 6A extending in the optical axis direction is connected to correction point 1D. Since support actuator 5 mainly supports the load of primary mirror 1, support pillar 5A has a pillar shape having a diameter about 10 times that of rod spring 6A.

The six shape correction actuators 6 arranged at the second farthest positions from the mirror surface center extend in the radial direction. Among the six shape correction actuators 6 arranged at the farthest positions from the mirror surface center, three shape correction actuators 6 arranged at angular positions at which support actuator 5 is not arranged extend in the radial direction. Among the six shape correction actuators 6 arranged at the farthest positions, three shape correction actuators 6 arranged at angular positions at which support actuator 5 is arranged extend in a direction forming an angle of 60 degrees with respect to the radial direction. The remaining three support actuators 5 extend in a direction forming an angle of 34 degrees with respect to the radial direction. Since the space becomes narrower as it becomes closer to the mirror surface center, the six shape correction actuators 6 closest to the mirror surface center extend in a direction forming an angle of 30 degrees with respect to the radial direction so as not to interfere with each other.

The operating principles of the support actuator and shape correction actuator 6 will be described with reference to Figs. 11 and 12. Fig. 11 is a schematic vertical sectional view of the reflecting mirror device. Fig. 11 is a sectional view taken along the line BB shown in Fig. 7. A section BB is a section including optical axis LX of the primary mirror. Fig. 12 is a schematic sectional view showing an actuator included in the reflecting mirror device according to Embodiment 1. Note that the support actuator shown in Figs. 11 and 12 has a structure different from that of support actuator 5 used in reflecting mirror device 1. The reference sign of the support actuator shown in Fig. 11 is 7. Fig. 11 shows shape correction actuator 6 and support actuator 7 arranged at the innermost and intermediate positions with respect to the mirror surface center. Fig. 12 shows shape correction actuator 6 and support actuator 7 arranged at the outermost position.

First, the operating principle of shape correction actuator 6 will be described. Shape correction actuator 6 mainly includes rod spring 6A, a link member 6B, a strut 6C, a rotation axis 6D, a voice coil motor 8, a brake 9, and a displacement sensor 10. Rod spring 6A has a first end connected to correction point 1D and pushes and pulls correction point 1D in the optical axis direction. Voice coil motor 8 generates a driving force to move rod spring 6A. Link member 6B, strut 6C, and rotation axis 6D transmit the driving force generated by voice coil motor 8 to rod spring 6A. Link member 6B, strut 6C, and rotation axis 6D constitute a lever. Brake 9 prevents link member 6B from rotating about rotation axis 6D. Displacement sensor 10 is provided on the surface of rear disk member 2 on the primary mirror 1 side. Displacement sensor 10 measures the distance between rear disk member 2 and primary mirror 1 in the vicinity of correction point 1D. Displacement sensor 10 is, for example, a distance sensor of eddy current type.

Rod spring 6A has a second end attached to link member 6B. In link member 6B, the point at which the second end of rod spring 6A is attached is referred to as a load point 6E. Strut 6C is provided on the rear surface of rear disk member 2. Rotation axis 6D is provided at a position near the lower end of strut 6C perpendicular to the direction in which link member 6B extends. Link member 6B is provided so as to be rotatable about rotation axis 6D. Rotation axis 6D is a fulcrum of link member 6B functioning as a lever. Rod spring 6A absorbs the difference in thermal deformation amount between rear structural frame 3 and rear disk member 2. The rigidity of rod spring 6A has a degree of freedom such that this rod spring is rotatable in the radial direction and is rigid in the circumferential tangential direction. Rod spring 6A is attached to correction point 1D and link member 6B so as to be rotatable in the radial direction. Rod spring 6A is a rod-shaped member having a first end connected to the shape correction point and a second end attached to the link member.

Voice coil motor 8 includes a plate-shaped permanent magnet 8A and an electromagnet 8B provided so as to sandwich permanent magnet 8A. Voice coil motor 8 changes the force acting between permanent magnet 8A and electromagnet 8B by changing the current flowing through electromagnet 8B. The center of plate-shaped permanent magnet 8A is referred to as an effort point 6F. The distance between effort point 6F and rotation axis 6D is represented by a variable L_{A}. The distance between load point 6E and rotation axis 6D is represented by a variable L_{B}. In shape correction actuator 6, L_{A} ≈ 2 * L_{B}. It is sufficient if L_{A} > L_{B}. Rod spring 6A can move up and down in the range of about ±1 mm. Voice coil motor 8 moves link member 6B up and down in the range of ± several mm.

Voice coil motor 8 is a link drive unit that generates a force for moving link member 6B in the optical axis direction. Voice coil motor 8 is provided, in link member 6B on the side opposite to the point at which rod spring 6A is attached with respect to rotation axis 6D, which is a fulcrum, at a position at which the distance from rotation axis 6D is larger than the distance from rotation axis 6D at the position at which rod spring 6A is attached. A motor or mechanism of a different type from that of the voice coil motor may be used as the link drive unit. The link drive unit is only required to cause electromagnetic force to act on link member 6B without contact with link member 6B.

Fig. 12 is shown such that permanent magnet 8A is provided on the link member 6B side and electromagnet 8B is provided on the rear disk member 2 side. Permanent magnet 8A may be provided on the rear disk member 2 side, and electromagnet 8B may be provided on the link member 6B side.

In voice coil motor 8, effort point 6F is moved in the optical axis direction by changing the force acting on effort point 6F. When effort point 6F moves in the optical axis direction, link member 6B rotates about rotation axis 6D, and load point 6E and thus rod spring 6A move in the optical axis direction. The direction in which rod spring 6A moves is opposite to the direction in which effort point 6F moves. In other words, rod spring 6A is moved in the optical axis direction by voice coil motor 8, and rod spring 6A pushes and pulls correction point 1D of primary mirror 1. In shape correction actuator 6, the minute driving force of voice coil motor 8 is amplified, and the displacement is reduced, thus generating a driving force and a displacement that enable shape correction of mirror surface 1A.

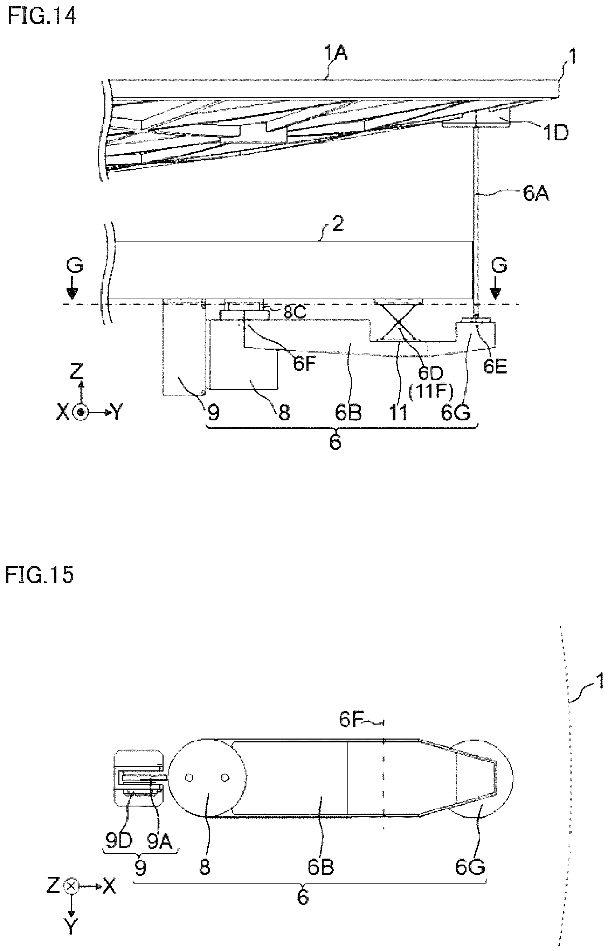

Brake 9 is provided on link member 6B at a position farther from rotation axis 6D than voice coil motor 8 is from rotation axis 6D, on the same side as voice coil motor 8 with respect to rotation axis 6D. Brake 9 includes a brake plate 9A, a brake pad 9B, a spring 9C, and an electromagnet 9D. Fig. 15 shows brake plate 9A and electromagnet 9D and does not show brake pad 9B and spring 9C. Brake plate 9A is provided on link member 6B at a position farther from rotation axis 6D than effort point 6F is from rotation axis 6D on the effort point 6F side of link member 6B. Brake pad 9B comes into contact with brake plate 9A to prevent brake plate 9A and link member 6B from moving relative to rear disk member 2 by frictional force. Spring 9C is biased so as to press brake pad 9B against brake plate 9A. Electromagnet 9D attracts brake pad 9B during operation so that brake pad 9B does not come into contact with brake plate 9A. In brake 9, when no electric power is supplied, brake pad 9B is in contact with brake plate 9A, and brake plate 9A and thus link member 6B do not move. A state in which brake 9 prevents link member 6B from moving relative to rear disk member 2 is referred to as a locked state. A state in which brake plate 9A and link member 6B are movable relative to rear disk member 2 is referred to as a non-locked state. Brake 9 maintains the non-locked state when no electric power is supplied.

Support actuator 7 is an actuator of ball screw type. Support actuator 7 includes a fixed portion 7A and a movable portion 7B. Fixed portion 7A is fixed to rear structural frame 3. Movable portion 7B is movable in the optical axis direction relative to fixed portion 7A. Inside fixed portion 7A, a mechanism for moving movable portion 7B is housed. The inside of fixed portion 7A is not shown. Inside fixed portion 7A, a stepping motor 7C, a screw rod 7D, a gear mechanism 7E, and a nut 7F are housed. These constitute a mechanism for moving movable portion 7B relative to fixed portion 7A. Screw rod 7D extends in the optical axis direction inside fixed portion 7A and is rotatably held by fixed portion 7A. Screw rod 7D is a rod with a circular cross section provided with an external screw on a side surface thereof. Nut 7F has a through hole provided with an internal screw on an inner surface thereof which meshes with screw rod 7E. Nut 7F does not rotate relative to fixed portion 7. When screw rod 7D rotates, nut 7F moves along screw rod 7D. Nut 7F is connected to movable portion 7B. When nut 7F moves, movable portion 7B also moves. Screw rod 7D is externally threaded on a side surface thereof, engages with movable portion 7B, and rotates, thereby moving movable portion 7B relative to fixed portion 7A.

Screw rod 7D may be connected to movable portion 7B, and when screw rod 7D rotates, screw rod 7D and movable portion 7B may move. A stepping motor, a screw rod, a gear mechanism, and a nut may be provided in the movable portion.

Stepping motor 7C and gear mechanism 7E rotate screw rod 7D. Gear mechanism 7E transmits the rotation of stepping motor 7C to screw rod 7D to rotate screw rod 7D. Stepping motor 7C is a movable portion drive unit that generates a driving force for moving movable portion 7B. Stepping motor 7C generates a driving force for rotating screw rod 7D. Gear mechanism 7E transmits the rotation of stepping motor 7C to screw rod 7D so that screw rod 7D rotates. The gear ratio of gear mechanism 7E is made sufficiently large. Thus, screw rod 7D rotates with the small driving force of stepping motor 7C. Also, when electric power is no longer supplied to support actuator 7, even if a force for moving in the optical axis direction acts on movable portion 7B, screw rod 7D does not rotate, and the position of movable portion 7B can be maintained even in the event of power failure. Since the support actuator is an actuator of ball screw type, a larger position holding force can be produced than when position is held by a brake.

The upper portion of movable portion 7B has the same shape as that of support pillar 5A. The upper portion of movable portion 7B is connected to supported point 1C via spherical bearing 1E so as to be rotatable with two degrees of freedom of rotation. By intervening spherical bearing 1E, movable portion 7B can hold primary mirror 1 as a rigid body. Spherical bearing 1E can absorb the moment reaction force at the point at which movable portion 7B supports supported point 1C. By so doing, harmful deformation can be prevented from being transmitted to mirror surface 1A. In addition, movable portion 7B includes a thermal deformation relief spring 7G (shown in Fig. 12). Thermal deformation relief spring 7G is provided to absorb the difference in thermal deformation amount between rear structural frame 3 and rear disk member 2.

In support actuator 7, movable portion 7B moves in the optical axis direction according to the rotation amount of stepping motor 7C. Since movable portion 7B is connected to supported point 1C, when movable portion 7B moves, movable portion 7B pushes and pulls supported point 1C.

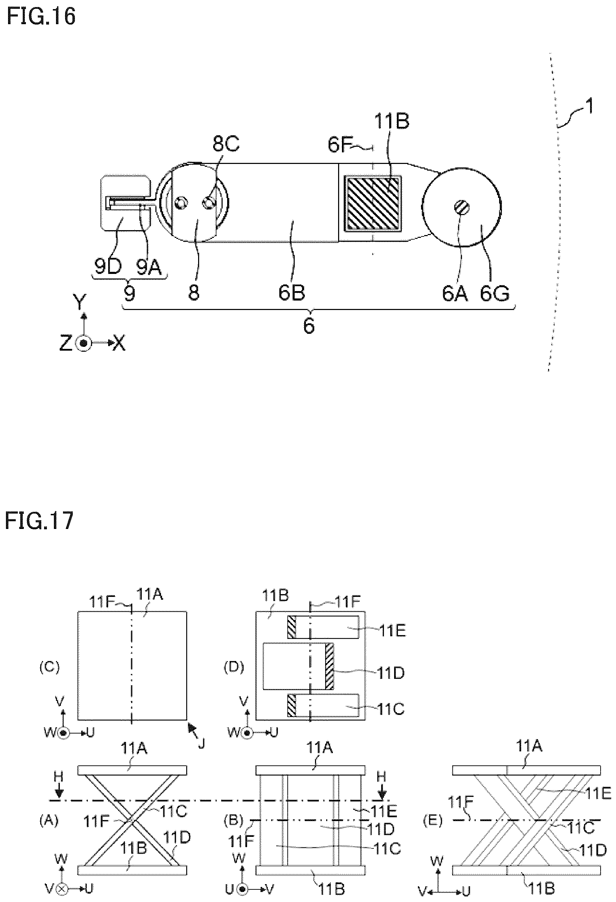

The structure of shape correction actuator 6 will be described with reference to Figs. 13 to 16. Fig. 13 is a side view of reflecting mirror device 50. Fig. 14 is an enlarged side view of reflecting mirror device 50. Fig. 14 enlarges region F shown in Fig. 13. Figs. 13 and 14 are side views as viewed from a line-of-sight direction C shown in Fig. 8. Note that displacement sensor 10 is not shown in Figs. 13 and 14. Fig. 15 is a bottom view of reflecting mirror device 50. Fig. 16 is a horizontal sectional view of reflecting mirror device 50. Fig. 16 is a sectional view as viewed from above on a section GG shown in Fig. 14. Shape correction actuator 6 shown in Figs. 14 to 16 is the one arranged at the lowermost position in Fig. 8 in the outermost arrangement circle.

Shape correction actuator 6 mainly includes rod spring 6A, link member 6B, rod spring attachment portion 6G, pivot member 11, voice coil motor 8, and brake 9. Pivot member 11 functions as a strut and a fulcrum. When viewed from the side, link member 6B is shaped to be recessed on the upper surface thereof at the portion connected with pivot member 11. The lower surface of link member 6B is inclined so as to become higher in position toward the ends on both sides of the portion connected with pivot member 11. Pivot member 11 is connected to link member 6B such that the front of pivot member 11, where the plate materials appear to intersect, is orthogonal to the direction in which link member 6B extends. Link member 6B has a horizontally long and approximately rectangular shape when viewed from the bottom, and has a shape such that the end on the side connected with rod spring 6A becomes thin. Cylindrical rod spring attachment portion 6G is provided at the thinned end of link member 6B. Rod spring 6A is attached to the center of the upper surface of rod spring attachment portion 6G. Link member 6B and rod spring attachment portion 6G are integrally formed. Link member 6B and rod spring attachment portion 6G have a thin-walled hollow structure.

Voice coil motor 8 has a cylindrical shape. The internal structure of voice coil motor 8 is not shown. Voice coil motor 8 includes permanent magnet 8A, electromagnet 8B, a connection portion 8C, and a weight 8D. Permanent magnet 8A of voice coil motor 8 is connected to the rear surface of rear disk member 2 by two connection portions 8C. Portions of voice coil motor 8 other than permanent magnet 8A and connection portion 8C are attached to link member 6B. Inside voice coil motor 8, electromagnet 8B sandwiches permanent magnet 8A. Voice coil motor 8 generates a driving force for moving link member 6B up and down by changing the intensity of the magnetic field generated by electromagnet 8B. Weight 8D has a weight such that the moments acting due to gravity on both sides of rotation axis 6D are substantially the same. Weight 8D is provided on the lower side inside voice coil motor 8. Moments being substantially the same means that the difference between the moments due to gravity acting on both sides of rotation axis 6D is less than or equal to a predetermined moment upper limit. The moments due to gravity on the side on which rod spring 6A is located also include the moment due to the load from primary mirror 1 borne by rod spring 6A at correction point 1D. The moment upper limit is set to a necessary and sufficient small value.

Brake 9 has a structure in which electromagnet 9D sandwiches brake plate 9A parallel to the direction in which link member 6B extends and in the optical axis direction.

The structure of pivot member 11 will be described with reference to Fig. 17. Fig. 17 is a diagram illustrating the structure of pivot member 11 of shape adjustment actuator 6 included in reflecting mirror device 50. Fig. 17(A) is a front view of pivot member 11. Fig. 17(B) is a right side view. Fig. 17(C) is a plan view. Fig. 17(D) is a horizontal sectional view taken along a section HH shown in Figs. 17(A) and (B). Fig. 17(E) is a side view as viewed from a line-of-sight direction J shown in Fig. 17(C).

Pivot member 11 includes a fixed plate 11A, a movable plate 11B, a first inclined plate 11C, a second inclined plate 11D, and a third inclined plate 11E. Fixed plate 11A is fixed to the rear surface of rear disk member 2. Movable plate 11B is connected to the upper surface of link member 6B. Fixed plate 11A and movable plate 11B are square plate materials of the same size and have the same thickness. With no force being applied to pivot member 11, fixed plate 11A and movable plate 11B are parallel to each other.

First inclined plate 11C and third inclined plate 11E are plate materials provided so as to connect an end of fixed plate 11A, which is on the right side in Fig. 17(A), to an end of movable plate 11B, which is on the left side in the figure. Second inclined plate 11D is a plate material provided so as to connect an end of fixed plate 11A, which is on the left side in the figure, to an end of movable plate 11B, which is on the right side in the figure. First inclined plate 11C, second inclined plate 11D, and third inclined plate 11E have the same thickness.

In order to describe the structure of pivot member 11, a UVW orthogonal coordinate system is defined. A plane parallel to fixed plate 11A and movable plate 11B is defined as a UV plane, and a direction perpendicular to fixed plate 11A and movable plate 11B is defined as a W-axis. The U-axis and the V-axis are defined parallel to the sides of fixed plate 11A and movable plate 11B, which are squares. The V-axis is defined in a direction in which the side surfaces of first inclined plate 11C, second inclined plate 11D, and third inclined plate 11E are visible. The U-axis is a direction orthogonal to the V-axis in the UV plane. The upward direction from bottom to top in Fig. 17(A) is the positive direction of the W-axis. In Fig. 17(C), the direction from left to right is the positive direction of the U-axis, and the direction from bottom to top is the positive direction of the V-axis.

As shown in Fig. 17(A), when viewed from the front, first inclined plate 11C and second inclined plate 11D intersect each other. As shown in Fig. 17(B), when viewed from the side, first inclined plate 11C connects ends of fixed plate 11A and movable plate 11B, which are on the left side in the figure, to each other. Second inclined plate 11D connects portions of fixed plate 11A and movable plate 11B, which are at the center in the figure, to each other. Third inclined plate 11E connects ends of fixed plate 11A and movable plate 11B, which are on the right side in the figure, to each other. The widths of first inclined plate 11C and third inclined plate 11E are the same, and the width of second inclined plate 11D is twice the width of first inclined plate 11C. The width of the spaces between first inclined plate 11C, second inclined plate 11D, and third inclined plate 11E as viewed from the side is very small, as shown in Fig. 17(B). Therefore, when pivot member 11 is viewed from the side, it appears as if any of first inclined plate 11C, second inclined plate 11D, and third inclined plate 11E is located between fixed plate 11A and movable plate 11B.

Pivot member 11 has a rotation axis 11F parallel to the V-axis at a position at which first inclined plate 11C and second inclined plate 11D intersect each other when pivot member 11 is viewed from the front. When voice coil motor 8 applies force to link member 6B, pivot member 11 rotates about rotation axis 11F, and movable plate 11B rotates relative to fixed plate 11A. This is because each of first inclined plate 11C and third inclined plate 11E, which intersect each other when viewed from the front, and second inclined plate 11D bends as a cantilever plate having a fixed end connected to fixed plate 11A and a movable end connected to movable plate 11B.

Since pivot member 11 is connected to the recessed portion of the upper surface of link member 6B, rotation axis 11F is arranged at a position of substantially the same height as that of the point at which link member 6B is connected to rod spring 6A. Rotation axis 11F of pivot member 11 is rotation axis 6D of shape correction actuator 6.

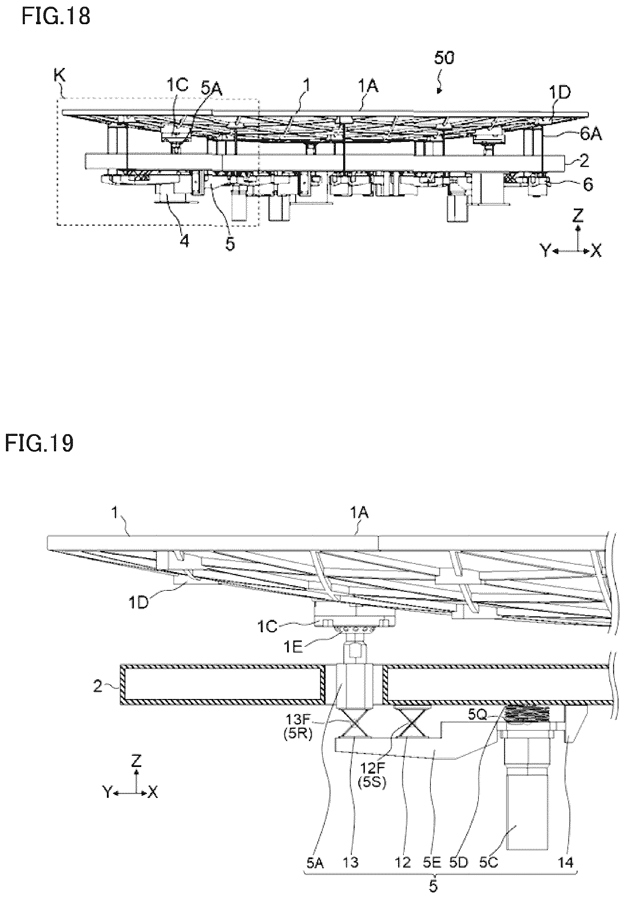

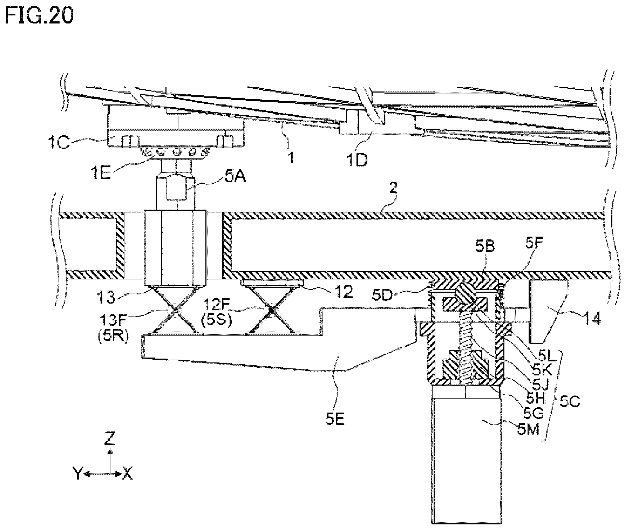

The structure of support actuator 5 will be described with reference to Figs. 18 to 20. Fig. 18 is another side view of reflecting mirror device 50. Fig. 19 is another enlarged side view of reflecting mirror device 50. Fig. 20 is a diagram showing the inside of support actuator 5 partially broken away in Fig. 19. Figs. 18 to 20 are side views of reflecting mirror device 50 viewed from a line-of-sight direction D shown in Fig. 8. Fig. 19 is an enlarged side view of a region K shown in Fig. 18. Fig. 20 further enlarges the portion of support actuator 5 of Fig. 19. In Figs. 19 and 20, rear disk member 2 is shown as a sectional view on a section EE shown in Fig. 8. In Fig. 20, the upper portion of a movable portion 5C included in support actuator 5 is shown broken away. Support actuator 5 shown in Figs. 19 and 20 is the one arranged at the bottom left in Fig. 8.

Support actuator 5 includes support pillar 5A, a fixed portion 5B (shown in Fig. 20), movable portion 5C, a spring 5D, a link member 5E, a fulcrum pivot member 12, a connection pivot member 13, and a brake 14. Since the mechanism for moving movable portion 5C is a ball screw mechanism, support actuator 5 is an actuator of ball screw type. Support actuator 5 uses a lever to increase the force acting on movable portion 5C, applying the force at support pillar 5A. Support pillar 5A is a support rod-shaped member connected to supported point 1C. Fixed portion 5B has a disk shape. Fixed portion 5B is fixed to the rear surface of rear disk member 2. Movable portion 5C is movable in the optical axis direction relative to fixed portion 5B. Movable portion 5C is connected to the surface of link member 5E farther from rear disk member 2. The ball screw mechanism for moving movable portion 5C passes through a space provided in link member 5E, and a first end thereof comes into contact with fixed portion 5B. Fulcrum pivot member 12 is a pivot member that serves as a fulcrum of support actuator 5 as a lever. Fulcrum pivot member 12 has a rotation axis 12F. Rotation axis 12F is a support fulcrum that enables link member 5E to rotate thereabout. Connection pivot member 13 is a pivot member that connects link member 5E to support pillar 5A. Brake 14 prevents link member 5E from moving relative to rear disk member 2.

A cylindrical internal space is located above the portion of link member 5E which is connected with movable portion 5C. The cylindrical internal space of link member 5E communicates with the internal space of movable portion 5C. A part of the ball screw mechanism for moving movable portion 5C is located in the cylindrical internal space of link member 5E. On the surface of link member 5E facing rear disk member 2, annular protrusion 5F is provided to expand the cylindrical space upward in the figure. Spring 5D is provided between rear disk member 2 and link member 5E such that fixed portion 5B and annular protrusion 5F enter the inside thereof. Spring 5D pushes link member 5E away from rear disk member 2.

As shown in Fig. 20, movable portion 5C includes a nut housing portion 5G, a nut 5H, a screw rod 5J, a tip disk 5K, a ball 5L, a motor housing portion 5M, a stepping motor 5N (not shown), and a gear mechanism 5P (not shown). Nut housing portion 5G is a member attached to link member 5E. Nut housing portion 5G is a cylindrical member with a bottom and a flange, which is open on one side. The open end of nut housing portion 5G is attached to link member 5E. Nut housing portion 5G has a cylindrical space communicating with the internal space of link member 5E. Nut housing portion 5G houses nut 5H and screw rod 5J. Nut 5H is fixed to the bottom surface of nut housing portion 5G.

Tip disk 5K is a disk-shaped plate attached to the tip of screw rod 5J. Ball 5N is a sphere. Ball 5N is located between tip disk 5K and fixed portion 5B and causes tip disk 5K and fixed portion 5B to engage with each other such that the angle formed by tip disk 5K and fixed portion 5B can be changed. At positions of tip disk 5K and fixed portion 5B, which are at the center when viewed from the optical axis direction, a recess having a shape conforming to the spherical surface of ball 5N is provided. Ball 5N enters the recesses provided in tip disk 5K and fixed portion 5B. Motor housing portion 5M houses stepping motor 5N and gear mechanism 5P. Motor housing portion 5M has a quadrangular prism shape. Stepping motor 5N and gear mechanism 5P rotate screw rod 5J and tip disk 5K.

Screw rod 5J is a rod with a circular cross section provided with an external screw on a side surface thereof. Nut 5H has a through hole provided with an internal screw on an inner surface thereof that meshes with screw rod 5J. When screw rod 5J rotates, screw rod 5J moves relative to nut 5H. When screw rod 5J moves, the length of screw rod 5J protruding upward from nut housing portion 5G changes. When the length of screw rod 5J protruding upward from nut housing portion 5G changes, the distance between tip disk 5K and the bottom surface of nut housing portion 5G changes. Motor housing portion 5M is attached to the lower side of nut housing portion 5G. Thus, when screw rod 5J rotates, the entire movable portion 5C rotates about rotation axis 12F and moves. Note that since tip disk 5K is connected to fixed portion 5B via ball 5N, which is a sphere, the entire movable portion 5C can rotate about rotation axis 12F. Screw rod 5J is externally threaded on a side surface thereof and rotates to move movable portion 5C relative to fixed portion 5B. Screw rod 5J is included in support actuator 5, and screw rod 5J engages with movable portion 5C.

Screw rod 5J passes through an opening provided in the bottom surface of nut housing portion 5G. The lower portion of screw rod 5J is located inside motor housing portion 5M. Inside motor housing portion 5M, stepping motor 5N and gear mechanism 5P rotate screw rod 5J. Gear mechanism 5P transmits the rotation of stepping motor 5N to screw rod 5J to rotate screw rod 5J. Stepping motor 5N is a movable portion drive unit that generates a driving force for moving movable portion 5C. Stepping motor 5N generates a driving force for rotating screw rod 5J.

Link member 5E is connected to movable portion 5C on one side with respect to fulcrum pivot member 12. The point of link member 5E which is connected to movable portion 5C is referred to as an effort point 5Q. Link member 5E is connected to support pillar 5A on the other side. The point at which link member 5E is connected to support pillar 5A is referred to as a load point 5R. Link member 5E is a support link member that is connected with support pillar 5A and is rotatable about rotation axis 12F. Effort point 5Q is a point on which the driving force generated by stepping motor 5N acts. In link member 5E, effort point 5Q is provided at a point which is opposite to link member 5E with respect to rotation axis 12F and at which the distance from rotation axis 12F is larger than the distance between load point 5R and rotation axis 12F.

Fulcrum pivot member 12 is provided between the point at which movable portion 5C is connected and the point at which support pillar 5A is connected on the upper surface of link member 5E. Fulcrum pivot member 12 is connected to link member 5E such that rotation axis 12F is orthogonal to the direction in which link member 5E extends. Fulcrum pivot member 12 is a pivot member that functions as a fulcrum for rotating link member 5E and as a strut provided with the fulcrum. Rotation axis 12F of fulcrum pivot member 12 is a rotation axis 5S of support actuator 5. Fulcrum pivot member 12 is a support strut provided on the rear surface of rear disk member 2 on which rotation axis 12F is provided.

Connection pivot member 13 is a pivot member that connects link member 5E to support pillar 5A. Connection pivot member 13 is provided so that when link member 5E tilts, a reaction force due to the tilting is not transmitted to supported point 1C via support pillar 5A. Connection pivot member 13 is connected to link member 5E such that rotation axis 13F is orthogonal to the direction in which link member 5E extends. Since support pillar 5A is connected to link member 5E via connection pivot member 13, support pillar 5A moves only in the optical axis direction. Also, connection pivot member 13 absorbs the difference in thermal deformation amount between rear structural frame 3 and rear disk member 2 to prevent unnecessary force from being transmitted to supported point 1C.

Link member 5E has a thin-walled hollow structure. Fulcrum pivot member 12 and connection pivot member 13 are formed of plate materials as thin as possible within a range in which necessary strength can be obtained.

The upper surface of link member 5E is low in height on the right side in the figure. Fulcrum pivot member 12 and connection pivot member 13 are connected to the low-height portion of the upper surface of link member 5E. Consequently, the positions of rotation axis 12F of fulcrum pivot member 12 and rotation axis 13F of connection pivot member 13 can be at the same positions as that of the upper surface of link member 5E. In Fig. 19, effort point 5Q and load point 5R of link member 5E, which is a lever, are shown at positions of the same height as that of rotation axis 5S, which serves as a fulcrum. Note that load point 5R is at the same position as that of rotation axis 13F.

In support actuator 5, movable portion 5C moves in the optical axis direction according to the rotation amount of stepping motor 5F. Movable portion 5C is connected to supported point 1C via link member 5E and support pillar 5A. Thus, when movable portion 5C moves, support pillar 5A pushes and pulls supported point 1C.

In support actuator 5, the distance between effort point 5Q and rotation axis 12F is represented by a variable L_{C}. The distance between load point 5R and rotation axis 12F is represented by a variable L_{D}. In support actuator 5, L_{C} ≈ 2 * L_{D}. It is sufficient if L_{C} > L_{D}.

Brake 14 is provided at a position farther from fulcrum pivot member 12 than movable portion 5C is from fulcrum pivot member 12. Brake 14 has a similar structure to that of brake 9. Although not shown, brake 14 includes a brake plate 14A, a brake pad 14B, a spring 14C, and an electromagnet 14D. Brake plate 14A is provided in the direction in which link member 5E extends, on the side of movable portion 5C opposite to the side connected with link member 5E. Brake pad 14B comes into contact with brake plate 14A to prevent brake plate 14A from moving by frictional force. Spring 14C is biased so as to separate brake pad 14B from brake plate 9A. Electromagnet 14D attracts brake pad 14B during operation to bring brake pad 14B into contact with brake plate 14A. In brake 14, when no electric power is supplied, brake pad 14B is not in contact with brake plate 14C, and brake plate 14C and thus link member 5E can move. A state in which brake 14 prevents link member 5E from moving is referred to as a locked state. A state in which link member 5E is movable is referred to as a non-locked state.

Brake 14 is a support brake that prevents link member 5E from rotating. Brake 14 is provided on the same side of link member 5E as that of stepping motor 5N with respect to rotation axis 12F to prevent link member 5E from moving relative to rear disk member 2.

Brake 14 maintains the non-locked state in which link member 5E is movable relative to rear disk member 2 when no electric power is supplied to support actuator 5. When no electric power is supplied to support actuator 5, support actuator 5 prevents link member 5E from rotating with a force larger than that of brake 14. Thus, when no electric power is supplied to support actuator 5, holding force by brake 14 is unnecessary, and brake 14 takes the non-locked state when no electric power is supplied in order to suppress power consumption.

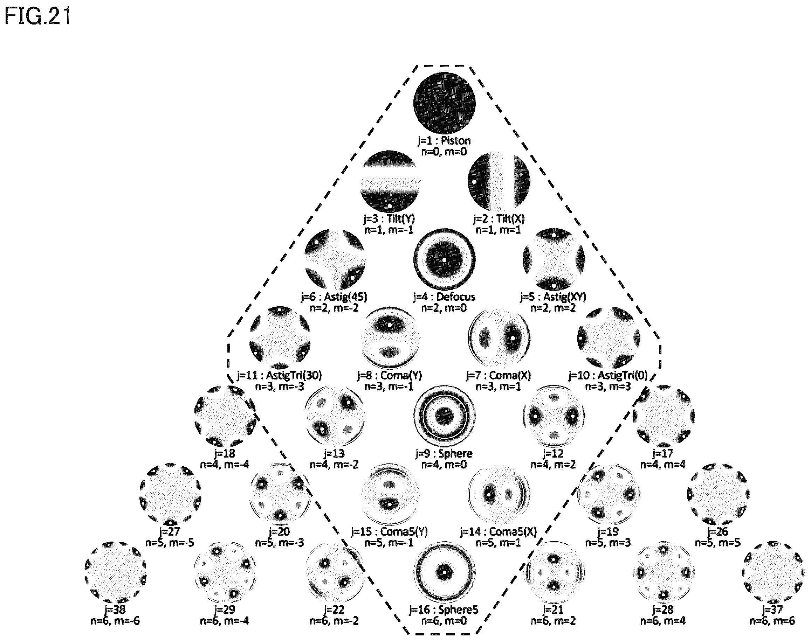

In reflecting mirror device 50, three support actuators 5 and 18 shape correction actuators 6 are arranged as shown in Fig. 10. Reflecting mirror 50 can correct deformation of mirror surface 1 of Zernike modes j = 1 to 16 surrounded by broken lines in Fig. 21. Fig. 21 is a diagram showing Zernike modes of a mirror surface. The Zernike mode is a mirror surface deformation mode expressed by a Zernike polynomial. The Zernike polynomial is an orthogonal polynomial defined on and within a unit circle. Zernike polynomials are generally used in optics to analytically treat axially symmetric optical aberrations based on diffraction theory. In Fig. 21, darker gray portions indicate portions where the amount of protruding or recessed deformation is larger. In protruding deformation portions, white circles, white line circles, or arcs are attached to the gray portions.

When point P = (x, y) on mirror surface 1A represented by a unit circle is represented by polar coordinates (r, θ), a Zernike polynomial Φ_{n,m}(r, θ) is represented by expressions (1) to (3) below, where θ is an angle formed by a line segment OP and the X-axis, n is a non-negative integer, and m is an integer satisfying |m| ≤ n. [Math 1] $\begin{matrix}{Φ}_{n , m} \left(r, θ\right) = {\sum }_{s = 0}^{n / 2} {r}^{n - 2 s} R \left(s\right) & m = 0 & \left(1\right) \\ {Φ}_{n , m} \left(r, θ\right) = {\sum }_{s = 0 m}^{\left(n-\left|m\right|\right) / 2} {r}^{n - 2 s} R \left(s\right) cos \left(mθ\right) & m > 0 & \left(2\right) \\ {Φ}_{n , m} \left(r, θ\right) = {\sum }_{s = 0}^{\left(n-\left|m\right|\right) / 2} {r}^{n - 2 s} R \left(s\right) sin \left(mθ\right) & m < 0 & \left(3\right)\end{matrix}$

A coefficient R(s) determined by a subscript s of sigma used in expressions (1) to (3) is represented by expression (4) below.
[Math 2] $R \left(s\right) = {\left(-1\right)}^{s} \frac{\left(n-s\right) !}{s ! \left(\frac{n + \left|m\right|}{2}-s\right) ! \left(\frac{n - \left|m\right|}{2}-s\right) !}$ (4)

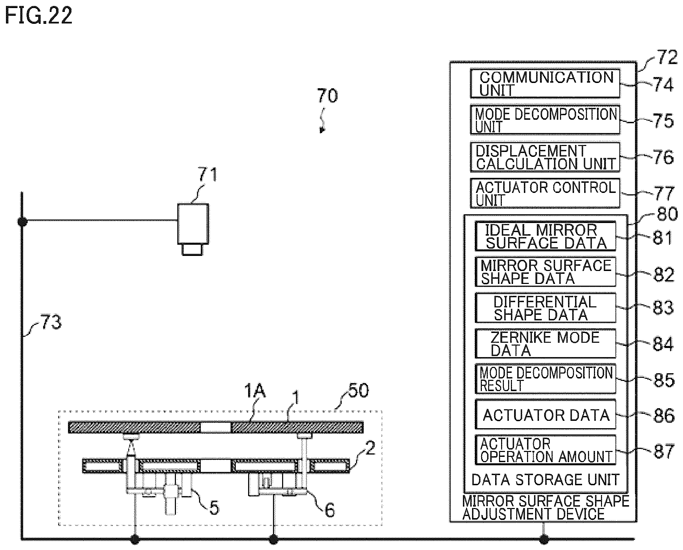

A configuration of reflecting mirror surface adjustment system 70 that adjusts the shape of mirror surface 1A of primary mirror 1 included in reflecting mirror device 50 will be described with reference to Fig. 22. Reflecting mirror surface adjustment system 70 includes reflecting mirror device 50, a wavefront sensor 71, a mirror surface shape adjustment device 72, and a network 73. Wavefront sensor 71 is installed in front of mirror surface 1A in the optical axis direction. Wavefront sensor 71 measures the shape of mirror surface 1A. Wavefront sensor 71 is, for example, a Shack-Hartmann wavefront sensor. Mirror surface shape adjustment device 72 receives data representing the shape of mirror surface 1A (mirror surface shape data) measured by wavefront sensor 71, and controls support actuator 5 and shape correction actuator 6 so that the shape of mirror surface 1A becomes an intended shape. Each of support actuator 5 and shape correction actuator 6 is referred to as each actuator.

Network 73 enables reflecting mirror device 50, wavefront sensor 71, and mirror surface shape adjustment device 72 to communicate with each other. Network 73 is a local area network (LAN). Note that wavefront sensor 71 and mirror surface shape adjustment device 72 may be connected by a dedicated signal line without using a network. Each actuator may be connected to mirror surface shape adjustment device 72 by a dedicated signal line.

Mirror surface shape adjustment device 72 includes a data storage unit 80, a communication unit 74, a mode decomposition unit 75, a displacement calculation unit 76, and an actuator control unit 77. Data storage unit 80 stores data necessary for control. Communication unit 74 communicates with reflecting mirror device 50 and wavefront sensor 71. Mode decomposition unit 75 decomposes mirror surface shape data into Zernike modes. Displacement calculation unit 76 calculates a displacement amount in each actuator for canceling deformation of mirror surface 1A represented by a weighted sum of decomposed Zernike modes. Actuator control unit 77 controls each actuator to the calculated displacement amount.

Data storage unit 80 stores ideal mirror surface data 81, mirror surface shape data 82, differential shape data 83, Zernike mode data 84, a mode decomposition result 85, actuator data 86, and an actuator operation amount 87. Ideal mirror surface data 81 is data storing a desirable shape to be taken by mirror surface 1A. Ideal mirror surface data 81 is stored in advance. Mirror surface shape data 82 is mirror surface shape data measured by wavefront sensor 71. Differential shape data 83 is data representing how mirror surface shape data 82 differs from ideal mirror surface data 81. Zernike mode data 84 is data representing the shape of mirror surface 1A according to the Zernike polynomial of each mode. Zernike mode data 84 also includes data on the displacement amount of each actuator for canceling deformation of mirror surface 1A due to a mode when there is such a mode in a unit amount. Mode decomposition result 85 is data representing the amount of each Zernike mode included in differential shape data 83. Mode decomposition unit 75 calculates differential shape data 83 and mode decomposition result 85.

Actuator data 8 is data storing the installation position of each actuator, a coefficient for multiplying a force at a lever, parameters used for control, and the like. The parameters used for control are time constants, thresholds, and the like. Actuator operation amount 87 is data representing a displacement amount to be operated for each actuator in order to bring the shape of mirror surface 1A as close as possible to ideal mirror surface data 81. Displacement calculation unit 76 calculates actuator operation amount 87 with reference to Zernike mode data 84, mode decomposition result 85, and actuator data 86. Actuator control unit 77 controls each actuator with reference to actuator operation amount 87 and actuator data 8.

Mode decomposition unit 75 determines weighting coefficients of Zernike modes of respective orders such that the shape of mirror surface 1A represented by differential shape data 83 is determined by weighting and superimposing Zernike modes of the respective orders. Mode decomposition unit 75 determines weighting coefficients for Zernike modes up to a predetermined order of an object to be reduced (suppressed) in deformation (abbreviated as to-be-suppressed). The weighting coefficient for each to-be-suppressed Zernike mode is mode decomposition result 85.

Displacement calculation unit 76 calculates actuator operation amount 87 by multiplying the displacement amount in each actuator for canceling each Zernike mode by mode decomposition result 85 and adding the products.

Actuator control unit 77 performs control such that the displacement amount of actuator operation amount 87 eventually becomes appropriate, considering the response characteristics of primary mirror 1 when force is applied, response characteristics of each actuator, and the like. Actuator control unit 77 controls each actuator by an appropriate control method. An appropriate control method is PID control, optimal control, or any other control method.

Actuator control unit 77 performs control by also referring to a measurement value of the displacement amount measured by displacement sensor 10 so that each actuator does not move too much. Actuator control unit 77 has a function of stopping control when the displacement amount exceeds a threshold.

Mirror surface shape adjustment device 72 receives mirror surface shape data 81 and controls voice coil motor 8 and stepping motor 5N so that mirror surface 1A takes a shape as to reduce the difference from ideal mirror surface data 81.

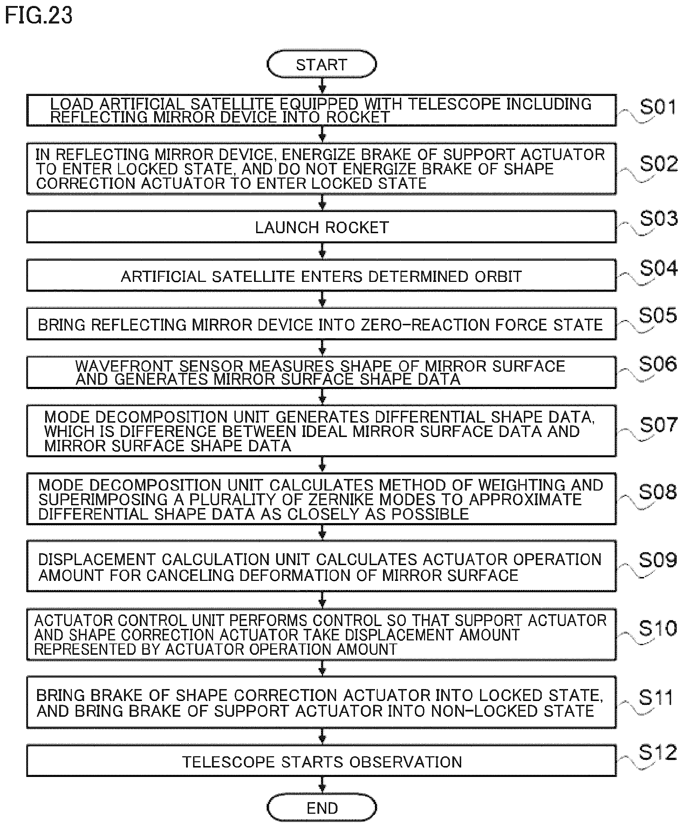

The operation will be described. Fig. 23 is a flowchart illustrating a procedure until a telescope including the reflecting mirror device according to Embodiment 1 is launched into outer space and used for observation. In step S01, an artificial satellite equipped with a telescope including reflecting mirror device 50 is loaded into a rocket. In step S02, in reflecting mirror device 50, brake 14 of support actuator 5 is energized to enter the locked state, and brake 9 of shape correction actuator 6 is not energized to enter the locked state. In step S03, the rocket is launched. In step S04, the artificial satellite enters a determined orbit.

In step S05, reflecting mirror device 50 is brought into a zero-reaction force state. In the zero-reaction force state, the displacement amounts of the three support actuators 5 are made the same, brake 14 of support actuator 5 is not energized to enter the non-locked state, brake 9 of shape correction actuator 6 is energized to enter the non-locked state, and the driving force of voice coil motor 8 of shape correction actuator 6 is set to zero. In step S06, wavefront sensor 71 measures the shape of mirror surface 1A and generates mirror surface shape data.

In step S07, mode decomposition unit 75 generates differential shape data 83, which is the difference between mirror surface shape data 82 and ideal mirror surface data 81. In step S08, referring to Zernike mode data 84, mode decomposition unit 75 calculates weighting coefficients for a plurality of Zernike modes by weighting and superimposing the plurality of Zernike modes to approximate differential shape data 83 as closely as possible. The calculated weighting coefficient of the to-be-suppressed Zernike modes is mode decomposition result 85.

In step S09, displacement calculation unit 76 calculates actuator operation amount 87. Actuator operation amount 87 is the displacement amount of support actuator 5 and shape correction actuator 6 that cancels the deformation of mirror surface 1A represented by mode decomposition result 85.

In step S10, actuator control unit 77 controls each actuator so that support actuator 5 and shape correction actuator 6 take the displacement amount represented by actuator operation amount 87. Actuator control unit 77 appropriately performs control also considering response characteristics.

In step S11, shape correction actuator 6 is energized to bring brake 9 into the non-locked state, and support actuator 5 is de-energized to bring brake 14 into the locked state. In step S12, the telescope starts observation.

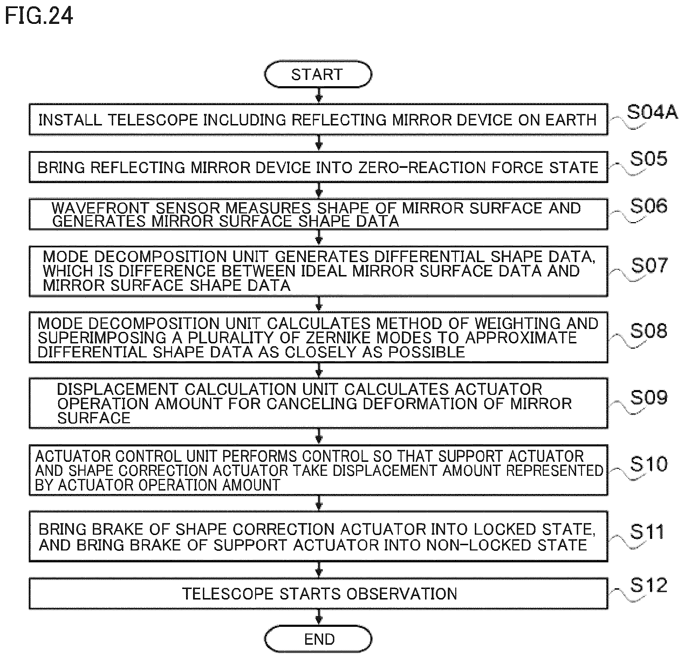

Reflecting mirror device 50 can also be used on Earth. A procedure until an optical telescope including reflecting mirror device 50 is installed on Earth and used for observation will be described with reference to Fig. 24. Fig. 24 is a flowchart illustrating a procedure until an optical telescope including the reflecting mirror device according to Embodiment 1 is installed on Earth and used for observation.

Regarding Fig. 24, differences from Fig. 23 will be described. S01 to S03 are not provided. Instead of S04, an optical telescope including reflecting mirror device 50 is installed on Earth in step S04A. The processes from S05 onward are the same.

Reflecting mirror device 50 is more lightweight than conventional reflecting mirror devices including actuators for actively controlling the mirror surface shape. Being more lightweight than conventional reflecting mirror devices means that when the shape of reflecting mirrors of the same size and shape and the same weight is controlled by the same number of actuators, reflecting mirror device 50 is more lightweight than the conventional reflecting mirror device. The conventional reflecting mirror device is a reflecting mirror device including actuators that do not use a lever.

The force to be applied to primary mirror 1 by each actuator to change the shape of mirror surface 1A is the same in reflecting mirror device 50 and the conventional reflecting mirror device. In reflecting mirror device 50, since each actuator uses a lever, the driving force to be generated by voice coil motor 8 can be smaller than when a lever is not used. Therefore, the weight of voice coil motor 8 can be smaller than the weight of a motor used in a conventional reflecting mirror device. Owing to a lightweight motor and a small driving force, the sturdiness that each actuator should have may also be smaller than conventional ones. The weight of the entire actuator can be reduced. Reflecting mirror device 50 also needs link members and the like for the lever. The link member only needs to be able to cope with a small driving force and can be made lightweight. Reflecting mirror device 50, even if it includes the weight of link members and the like, can be made more lightweight than conventional ones.

In reflecting mirror device 50, each actuator includes a brake, and each actuator can be brought into the locked state by operating the brake. In addition, since support actuator 5 is an actuator of ball screw type, even if an external force acts when brake 14 is in the non-locked state, the screw does not rotate and the supporting position can be maintained. The load applied to primary mirror 1 at the time of launch is mainly handled by support actuator 5. Since brake 9 of shape correction actuator 6 is operating, a force for pushing or pulling correction point 1D is not generated. By operating brake 9 of each shape correction actuator 6 to bring each shape correction actuator 6 into the locked state in launch with a rocket, damage to reflecting mirror device 50 due to impact at the time of launch can be prevented.

In reflecting mirror device 50, after the completion of the correction of the shape of mirror surface 1A by each actuator, power supply to shape correction actuator 6 is stopped. Brake 9 of shape correction actuator 6 operates, whereby each shape correction actuator 6 can maintain the state in which the shape of mirror surface 1A is corrected. When reflecting mirror device 50 is used, power supply to voice coil motor 8 of each shape correction actuator 6 is not performed. Therefore, reflecting mirror device 50 can maintain the shape of mirror surface 1A without consuming electric power.

If it is necessary to constantly operate the motor to maintain the shape of mirror surface 1A, the motor generates heat, which may deform mirror surface 1A by the heat. Reflecting mirror device 50 does not consume electric power to maintain the shape of mirror surface 1A at the time of observation, so considerations and measures for deformation caused by heat can be reduced. In conventional telescopes used in outer space, deformation of a primary mirror due to heat generated by equipment or heat received from sunlight and the like are affected the performance of the telescope most. Therefore, the benefit of being able to reduce considerations and measures for deformation caused by heat generation of equipment is great.

In the reflecting mirror device according to the present disclosure, the support actuator may not be used for correcting the mirror surface shape of the primary mirror. For example, instead of an actuator for each supported point, the reflecting mirror device may include an actuator that changes the position of rear disk member 2 relative to rear structural frame 3.

A conventional reflecting mirror support device using a lever targets a telescope having a large reflecting mirror and includes a support mechanism using a lever in order to suppress deformation of the reflecting mirror due to its own weight, which changes as the elevation angle of the telescope changes. In a support mechanism using a lever, a reflecting mirror is supported at a load point of the lever, and a counterweight corresponding to the load of the reflecting mirror acting on the load point is arranged at an effort point. Many patents have been applied for through improvements in the force transmission method in support mechanisms using a lever.

In outer space, there is zero gravity, and the mirror surface cannot be corrected by a lever mechanism using a counterweight. In order to cause the mirror surface of a reflecting mirror to have an ideal shape in outer space, the reflecting mirror device according to the present disclosure includes actuators that are actively displaced.

When using a reflecting mirror device on Earth, also, a lever mechanism using a counterweight and an actuator that is actively displaced are also used together. Since a hybrid method is used that uses a counterweight and an actuator together, the displacement amount shared by the actuator only needs to be the displacement amount excluding the displacement amount shared by the counterweight. Therefore, the driving force of the voice coil motor for driving the actuator may be smaller than when a counterweight is not used. By using a counterweight together, the reflecting mirror device can be made more lightweight. Since actuators are used together, adjustment of the weight of the counterweight can be simplified. Without spending much time on adjustment, the weight of the counterweight may be allowed to have an error from the weight that does not deform the mirror surface by gravity. If there is an error in the weight of the counterweight, the error can be shared by the actuator to bring the mirror surface shape closer to the ideal shape.

Simplifying the adjustment of the weight of the counterweight makes it possible to make the reflecting mirror thin and lightweight, and can reduce the manufacturing cost and adjustment cost of the reflecting mirror device by making the reflecting mirror lightweight. When the thickness of the reflecting mirror becomes thicker, deformation of the mirror surface due to its own weight becomes smaller. Due to high cost of adjusting the weight of the counterweight, conventionally, the thickness of the reflecting mirror device has been set to a rather large value within the constraint of the weight of the reflecting mirror. When the thickness of the reflecting mirror is increased, the number of points at which shape correction of the mirror surface is required can be reduced, and the number of counterweights whose weight should be adjusted also becomes smaller. However, if the reflecting mirror is thick and heavy, the weight of the entire reflecting mirror device also increases, and the manufacturing cost increases. In the case of a telescope used in outer space (space telescope), the launch cost also increases.

In the reflecting mirror device according to the present disclosure, in an actuator using a lever, the adjustment of the weight of the counterweight that offsets the weight of the reflecting mirror can be simplified. Therefore, even if the thickness of the reflecting mirror is reduced to be lightweight and a large number of actuators are installed, the labor for adjusting the weight of the counterweight does not increase. In other words, the reflecting mirror device according to the present disclosure can have a reduced thickness of the reflecting mirror and can be made lightweight, allowing a large number of actuators to be installed therein. Since the reflecting mirror is made more lightweight, the driving force to be output by each actuator can be reduced, and the weight of one actuator can be reduced compared to conventional ones. Therefore, even when a larger number of actuators than before are used, the weight of the reflecting mirror device can be reduced.

By reducing the thickness of the reflecting mirror, materials used can be reduced, resulting in a reduction in manufacturing cost. In addition, reducing the thickness of the reflecting mirror makes it possible to reduce the accuracy of the mirror surface shape in the manufacturing stage, resulting in a reduction in manufacturing cost. When the reflecting mirror is thick and is less easily deformed, the range in which the mirror surface shape can be corrected by an actuator becomes narrower, and it is necessary to manufacture the mirror surface of the reflecting mirror with high accuracy. In contrast, in the reflecting mirror device according to the present disclosure, even if the accuracy of the mirror surface shape of the reflecting mirror at the manufacturing stage is lower than conventional ones, it can be corrected by an actuator to obtain a mirror surface shape with accuracy required for observation. Since the accuracy of the mirror surface shape of the reflecting mirror at the manufacturing stage can be lower than conventional ones, the manufacturing cost of the reflecting mirror can be reduced.

If the reflecting mirror can be thin and lightweight, the weight of the entire reflecting mirror device can be reduced, resulting in a reduction in manufacturing cost. In the case of a space telescope, the launch cost can also be reduced.

The reflecting mirror device according to the present disclosure can be tested more easily on Earth for confirming the performance of a space telescope. In order to confirm the performance of a space telescope on Earth, it is necessary to evaluate the state of a primary mirror in a zero-gravity environment on Earth. Therefore, it was necessary to measure the mirror surface in two states by inverting either the space telescope alone or an artificial satellite equipped with the space telescope. The two states include a state in which the primary mirror faces the zenith and a state in which the primary mirror faces the Earth's surface perpendicularly. The difference in shape of the mirror surface between the two states is defined as the shape of the mirror surface in the space environment. In order to realize the state in which the primary mirror faces the Earth's surface perpendicularly, a large holding device is required that holds the space telescope alone or an artificial satellite equipped with the space telescope and inverts its posture. A test with the primary mirror facing the Earth's surface perpendicularly involves many steps and is complicated, increasing the time, effort, and cost for adjusting the mirror surface.

The reflecting mirror device according to the present disclosure includes an actuator using a lever, and has a counterweight that cancels the load of the primary mirror installed on the effort point side (voice coil motor side) of the link member of the lever. Therefore, the mirror surface shape of the primary mirror with the telescope facing the zenith is close to the mirror surface shape in a zero-gravity environment. A test for confirming active control of the mirror surface by each actuator can be performed using, as a reference, a mirror surface shape close to the mirror surface shape in a zero-gravity environment. In the reflecting mirror device according to the present disclosure, a test in which the space telescope alone or an artificial satellite equipped with the space telescope is inverted upside down is not necessary. Tests for assembly and performance confirmation of the telescope can be efficiently performed, and at least one of the time, effort, and cost for adjusting the mirror surface can be significantly reduced.

In the reflecting mirror device according to the present disclosure, a non-contact force transmission method called a voice coil motor method is adopted, rather than a method of driving a mechanical system that generates friction, such as a gear system. It is possible to solve the problem that the reference position becomes uncertain when a structure around the primary mirror supporting the primary mirror undergoes thermal deformation or moisture absorption deformation occurs, which is often caused in outer space. The reflecting mirror device can be brought into the zero-reaction force state by bringing the brake of each actuator into the non-locked state and preventing the voice coil motor from generating driving force. The zero-reaction force state is a state in which the influence on the mirror surface from deformation of the surrounding structure is zero, and no reaction force is applied to the primary mirror at all. In the zero-reaction force state, primary mirror 1 is in a completely free state, and internal force generated in the primary mirror by assembly on the ground is released, leading to minimal distortion of the mirror surface. The mirror surface position in the zero-reaction force state is defined as the reference position. After bringing the mirror surface into the zero-reaction force state, the mirror surface can be brought closer to the ideal mirror surface shape by applying displacement such as to cancel the difference from the ideal mirror surface shape.

In the reflecting mirror device according to the present disclosure, the mirror surface in the zero-reaction force state can be easily reproduced. In other words, since it is possible to return the mirror surface to its natural state at any time without causing excessive force to act on the primary mirror, the mirror surface can be easily brought closer to the ideal mirror surface shape even if displacement or the like occurs in structural members due to aging degradation. In addition, the influence of hysteresis of the control system, accumulation of errors, and the like can be completely reset by bringing the reflecting mirror device into the zero-reaction force state. Then, the mirror surface shape can be corrected with the same accuracy at any time from the zero-reaction force state by actuators. After correcting the mirror surface to a shape close to the ideal mirror surface shape with actuators, the brake is brought into the locked state so that the voice coil motor is not energized. By so doing, the corrected mirror surface shape can be maintained. In the corrected mirror surface shape, unnecessary internal force is not generated in the primary mirror, and the primary mirror can maintain the corrected mirror surface shape as it is for a long period of time.

When the reflecting mirror device is used on Earth, also, by bringing the brake of each actuator into the non-locked state and generating a driving force by the voice coil motor, it is possible to create a state in which gravity alone acts on the reflecting mirror. The state in which gravity alone acts on the reflecting mirror device is referred to as an unconstrained state. In the reflecting mirror device according to the present disclosure, the unconstrained state can be easily reproduced. By using the unconstrained state as an initial state for setting the shape of the mirror surface, the procedure in correction of the mirror surface shape of the primary mirror can always be the same, and the correction accuracy of the mirror surface shape can also be constant. After correcting the mirror surface shape, the brake of each actuator can be operated to maintain the mirror surface shape even when the reflecting mirror device is used on Earth.

The above operations and effects can also be achieved in a reflecting mirror device in which the support actuator is not used for correcting the mirror surface shape of the reflecting mirror. In reflecting mirror device 50, three support actuators 5 supporting three supported points 13 are used for correcting the mirror surface shape of primary mirror 1. Thus, the points of primary mirror 1 at which the displacement amount can be controlled are more numerous than when support actuators 5 are not used for correcting the mirror surface shape. Since there are many points of primary mirror 1 at which the displacement amount can be controlled, more deformation modes can be corrected. In addition, in deformation modes that can be corrected also when support actuators 5 are not used for correcting the mirror surface shape, the accuracy of correcting deformations is improved.

In a case where the support actuator is not used for correcting the mirror surface shape of the reflecting mirror, the mirror surface shape adjustment device receives mirror surface shape data 81 and controls voice coil motor 8 so that mirror surface 1A takes a shape such that the difference from ideal mirror surface data 81 becomes small.

Although the preferred embodiments and the like have been described in detail above, the present disclosure is not limited to the above-described embodiments and the like, and various modifications and substitutions can be added to the above-described embodiments and the like without departing from the scope described in the claims.

Hereinafter, various aspects of the present disclosure will be collectively described as additional notes.

### (Additional Note 1)

A reflecting mirror device including:
a reflecting mirror including
   a mirror surface to reflect electromagnetic waves,
   three supported points provided on a back surface of the mirror surface, and
   shape correction points of a predetermined total number provided on the back surface;
a structural member located on a rear surface side of the reflecting mirror to support the reflecting mirror, the rear surface side being opposite to a side on which the mirror surface is located;
three support units provided on the structural member and connected to the respective supported points to support the reflecting mirror; and
shape correction units equal in number to the shape correction points, the shape correction units being provided on the structural member to change positions of the respective shape correction points in an optical axis direction that is parallel to an optical axis of the reflecting mirror,
wherein each shape correction unit includes
   a strut provided on a rear surface of the structural member, the rear surface being opposite to a side on which the reflecting mirror is located,
   a link member provided so as to be rotatable about a fulcrum provided on the strut,
   a rod-shaped member having a first end connected to the link member and a second end attached to a corresponding one of the shape correction points, and
   a link drive unit provided, in the link member on a side opposite to a position at which the rod-shaped member is attached with respect to the fulcrum, at a position at which a distance from the fulcrum is larger than at the position at which the rod-shaped member is attached, the link drive unit generating a force for moving the link member in the optical axis direction.

### (Additional Note 2)

The reflecting mirror device according to additional note 1, wherein the shape correction unit includes a brake to prevent the link member from rotating.

### (Additional Note 3)

The reflecting mirror device according to additional note 2, wherein the brake is provided on the same side as the link drive unit with respect to the fulcrum of the link member to prevent the link member from moving relative to the structural member.

### (Additional Note 4)

The reflecting mirror device according to additional note 2 or 3, wherein the brake maintains a state in which the link member does not rotate relative to the structural member when no electric power is supplied to the shape correction unit.

### (Additional Note 5)

The reflecting mirror device according to any one of additional notes 1 to 4, wherein in the shape correction unit, a difference between moments due to gravity acting on both sides of the fulcrum is less than or equal to a predetermined moment upper limit.

### (Additional Note 6)

The reflecting mirror device according to any one of additional notes 1 to 5, wherein the link drive unit causes an electromagnetic force to act on the link member without contacting the link member.

### (Additional Note 7)

The reflecting mirror device according to additional note 6, wherein the link drive unit is a voice coil motor.

### (Additional Note 8)

The reflecting mirror device according to any one of additional notes 1 to 7, wherein each support unit includes
a fixed portion fixed to the structural member,
a movable portion that is movable in the optical axis direction relative to the fixed portion and is connected to a corresponding one of the supported points, and
a movable portion drive unit to generate a driving force for moving the movable portion.

### (Additional Note 9)

The reflecting mirror device according to additional note 8, wherein
the support unit includes a screw rod externally threaded on a side surface thereof, the screw rod engaging with the movable portion and rotating to move the movable portion relative to the fixed portion, and
the movable portion drive unit generates the driving force for rotating the screw rod.

### (Additional Note 10)

The reflecting mirror device according to additional note 8 or 9, wherein
the movable portion includes
   a support rod-shaped member connected to the supported point, and
   a support link member connected with the support rod-shaped member and being rotatable about a support fulcrum,
each support unit includes a support strut provided on the rear surface of the structural member on which the support fulcrum is provided, and
the driving force generated by the movable portion drive unit acts on an effort point provided at a point which is opposite to the support link member with respect to the support fulcrum and at which a distance from the support fulcrum is larger than a distance between a load point and the support fulcrum, the load point being a point at which the support rod-shaped member is connected to the support link member.

### (Additional Note 11)

The reflecting mirror device according to additional note 10, wherein the support unit includes a support brake to prevent the support link member from rotating.

### (Additional Note 12)

The reflecting mirror device according to additional note 11, wherein the support brake is provided on the same side as the movable portion drive unit with respect to the support fulcrum of the support link member to prevent the support link member from moving relative to the structural member.

### (Additional Note 13)

The reflecting mirror device according to additional note 12, wherein the support brake maintains a state in which the support link member is movable relative to the structural member when no electric power is supplied to the support unit.

### (Additional Note 14)

The reflecting mirror device according to any one of additional notes 1 to 13, wherein
the reflecting mirror has a circular shape when viewed from the optical axis direction,
the predetermined total number is a product of an arrangement circle number, which is an integer of 2 or more, and a same-radius number, which is an integer of 2 or more,
when viewed from the optical axis direction, the shape correction points of the same-radius number are arranged with rotational symmetry with a count of the same-radius number about a mirror surface center in each arrangement circle of arrangement circles of the arrangement circle number, the arrangement circle being a circle having a different radius centered on the mirror surface center, the mirror surface center being a center of the circular shape, and
each shape correction point arranged on the arrangement circle having a certain radius is arranged on a bisector of an angle formed on the mirror surface center by two line segments connecting the mirror surface center to two shape correction points adjacent in a circumferential direction arranged on the arrangement circles adjacent in a radial direction of the circular shape.

### (Additional Note 15)

The reflecting mirror device according to any one of additional notes 8 to 13, wherein
the reflecting mirror has a circular shape when viewed from the optical axis direction,
the predetermined total number is a product of an arrangement circle number, which is an integer of 2 or more, and a same-radius number, which is a multiple of 3,
when viewed from the optical axis direction, the shape correction points of the same-radius number are arranged with rotational symmetry with a count of the same-radius number about a mirror surface center in each arrangement circle of arrangement circles of the arrangement circle number, the arrangement circle being a circle having a different radius centered on the mirror surface center, the mirror surface center being a center of the circular shape,
each shape correction point arranged on the arrangement circle having a certain radius is arranged on a bisector of an angle formed on the mirror surface center by two line segments respectively connecting the mirror surface center to two of the shape correction points adjacent in a circumferential direction arranged on the arrangement circles adjacent in a radial direction of the circular shape, and
the shape correction points are respectively arranged on three straight lines connecting the mirror surface center to the respective three supported points.

### (Additional Note 16)

The reflecting mirror device according to additional note 14 or 15, wherein the arrangement circle number is 3, and the same-radius number is 6.

### (Additional Note 17)

A reflecting mirror surface adjustment system including:
the reflecting mirror device according to any one of additional notes 1 to 16;
a wavefront sensor arranged in front of the reflecting mirror device in the optical axis direction, the wavefront sensor measuring a shape of the mirror surface; and
a mirror surface shape adjustment device to receive mirror surface shape data and control the link drive unit so that the mirror surface takes a shape as to reduce a difference from ideal mirror surface data, the mirror surface shape data being data representing the shape of the mirror surface measured by the wavefront sensor, the ideal mirror surface data being data representing a shape to be taken by the mirror surface.

### (Additional Note 18)

The reflecting mirror surface adjustment system according to additional note 17, wherein the mirror surface shape adjustment device includes:
a mode decomposition unit to calculate a mode decomposition result for differential shape data by weighting and superimposing to-be-suppressed Zernike modes to approximate the differential shape data, the differential shape data being a difference between the mirror surface shape data and the ideal mirror surface data, the mode decomposition unit being a coefficient of the weighing;
a displacement calculation unit to determine a displacement amount in the optical axis direction at each shape correction point based on the mode decomposition result; and
a drive control unit to control the link drive unit so that each shape correction point moves by the displacement amount in the optical axis direction.

### (Additional Note 19)

A reflecting mirror surface adjustment system comprising:
the reflecting mirror device according to any one of additional notes 8 to 13 and 15;
a wavefront sensor arranged in front of the reflecting mirror device in the optical axis direction, the wavefront sensor measuring a shape of the mirror surface; and
a mirror surface shape adjustment device to receive mirror surface shape data and control the link drive unit and the movable portion drive unit so that the mirror surface takes a shape as to reduce a difference from ideal mirror surface data, the mirror surface shape data being data representing the shape of the mirror surface measured by the wavefront sensor, the ideal mirror surface data being data representing a shape to be taken by the mirror surface.

### (Additional Note 20)

The reflecting mirror surface adjustment system according to additional note 19, wherein the mirror surface shape adjustment device includes:
a mode decomposition unit to calculate a mode decomposition result for differential shape data by weighting and superimposing to-be-suppressed Zernike modes to approximate the differential shape data, the differential shape data being a difference between the mirror surface shape data and the ideal mirror surface data, the mode decomposition unit being a coefficient of the weighing;
a displacement calculation unit to determine a displacement amount in the optical axis direction at each of the shape correction points and the supported points based on the mode decomposition result; and
a drive control unit to control the link drive unit and the movable portion drive unit so that each of the shape correction point and the supported point moves by the displacement amount in the optical axis direction.

### REFERENCE SIGNS LIST

50 reflecting mirror device; 1 primary mirror (reflecting mirror); 1A mirror surface; 1B rib; 1C supported point; 1D correction point; 1E spherical bearing; 1F optical path opening; 2 rear disk member (structural member); 2A through hole; 2B optical path opening; 3 rear structural frame (structural member); 3A frame receiving member; 3B connection portion; 3C rib; 4 connecting member (structural member); 4A opening; 5 support actuator (support unit); 5A support pillar (support rod-shaped member); 5B fixed portion; 5C movable portion; 5D spring; 5E link member (support link member); 5F annular protrusion; 5G nut housing portion; 5H nut; 5J screw rod; 5K tip disk; 5L ball; 5M motor housing portion; 5N stepping motor (movable portion drive unit); 5P gear mechanism; 5Q effort point; 5R load point; 5S rotation axis (fulcrum); 6 shape correction actuator (shape correction unit); 6A rod spring (rod-shaped member); 6B link member; 6C strut; 6D rotation axis (fulcrum); 6E load point; 6F effort point; 6G rod spring attachment portion; 7 support actuator (support unit); 7A fixed portion; 7B movable portion; 7C stepping motor (movable portion drive unit); 7D screw rod; 7E gear mechanism; 7F nut; 7G thermal deformation relief spring; 8 voice coil motor (link drive unit); 8A permanent magnet; 8B electromagnet; 8C connection portion; 8D weight; 9 brake; 9A brake plate; 9B brake pad; 9C spring; 9D electromagnet; 10 displacement sensor; 11 pivot member (strut); 11A fixed plate; 11B movable plate; 11C first inclined plate; 11D second inclined plate; 11E third inclined plate; 11F rotation axis (fulcrum); 12 fulcrum pivot member (support strut); 12F rotation axis (support fulcrum); 13 connection pivot member; 13F rotation axis; 14 brake (support brake); 14A brake plate; 14B brake pad; 14C spring; 14D electromagnet; 60 secondary mirror support frame; 61 secondary mirror; 70 reflecting mirror surface adjustment system; 71 wavefront sensor; 72 mirror surface shape adjustment device; 73 network; 74 communication unit; 75 mode decomposition unit; 76 displacement calculation unit; 77 actuator control unit (drive control unit); 80 data storage unit; 81 ideal mirror surface data; 82 mirror surface shape data; 83 differential shape data; 84 Zernike mode data; 85 mode decomposition result; 86 actuator data; 87 actuator operation amount; LX optical axis.

## Claims

1. A reflecting mirror device comprising:
a reflecting mirror including
a mirror surface to reflect electromagnetic waves,
three supported points provided on a back surface of the mirror surface, and
shape correction points of a predetermined total number provided on the back surface;
a structural member located on a rear surface side of the reflecting mirror to support the reflecting mirror, the rear surface side being opposite to a side on which the mirror surface is located;
three support units provided on the structural member and connected to the respective supported points to support the reflecting mirror; and
shape correction units equal in number to the shape correction points, the shape correction units being provided on the structural member to change positions of the respective shape correction points in an optical axis direction that is parallel to an optical axis of the reflecting mirror,
wherein each shape correction unit includes
a strut provided on a rear surface of the structural member, the rear surface being opposite to a side on which the reflecting mirror is located,
a link member provided so as to be rotatable about a fulcrum provided on the strut,
a rod-shaped member having a first end connected to a corresponding one of the shape correction points and a second end attached to the link member, and
a link drive unit provided, in the link member on a side opposite to a position at which the rod-shaped member is attached with respect to the fulcrum, at a position at which a distance from the fulcrum is larger than at the position at which the rod-shaped member is attached, the link drive unit generating a force for moving the link member in the optical axis direction.

2. The reflecting mirror device according to claim 1, wherein the shape correction unit includes a brake to prevent the link member from rotating.

3. The reflecting mirror device according to claim 2, wherein the brake is provided on the same side as the link drive unit with respect to the fulcrum of the link member to prevent the link member from moving relative to the structural member.

4. The reflecting mirror device according to claim 2 or 3, wherein the brake maintains a state in which the link member does not rotate relative to the structural member when no electric power is supplied to the shape correction unit.

5. The reflecting mirror device according to any one of claims 1 to 4, wherein in the shape correction unit, a difference between moments due to gravity acting on both sides of the fulcrum is less than or equal to a predetermined moment upper limit.

6. The reflecting mirror device according to any one of claims 1 to 5, wherein the link drive unit causes an electromagnetic force to act on the link member without contacting the link member.

7. The reflecting mirror device according to claim 6, wherein the link drive unit is a voice coil motor.

8. The reflecting mirror device according to any one of claims 1 to 7, wherein each support unit includes
a fixed portion fixed to the structural member,
a movable portion that is movable in the optical axis direction relative to the fixed portion and is connected to a corresponding one of the supported points, and
a movable portion drive unit to generate a driving force for moving the movable portion.

9. The reflecting mirror device according to claim 8, wherein
the support unit includes a screw rod externally threaded on a side surface thereof, the screw rod engaging with the movable portion and rotating to move the movable portion relative to the fixed portion, and
the movable portion drive unit generates the driving force for rotating the screw rod.

10. The reflecting mirror device according to claim 8 or 9, wherein
the movable portion includes
a support rod-shaped member connected to each of the supported points, and
a support link member connected with the support rod-shaped member and being rotatable about a support fulcrum,
each support unit includes a support strut provided on the rear surface of the structural member on which the support fulcrum is provided, and
the driving force generated by the movable portion drive unit acts on an effort point provided at a point which is opposite to the support link member with respect to the support fulcrum and at which a distance from the support fulcrum is larger than a distance between a load point and the support fulcrum, the load point being a point at which the support rod-shaped member is connected to the support link member.

11. The reflecting mirror device according to claim 10, wherein the support unit includes a support brake to prevent the support link member from rotating.

12. The reflecting mirror device according to claim 11, wherein the support brake is provided on the same side as the movable portion drive unit with respect to the support fulcrum of the support link member to prevent the support link member from moving relative to the structural member.

13. The reflecting mirror device according to claim 12, wherein the support brake maintains a state in which the support link member is movable relative to the structural member when no electric power is supplied to the support unit.

14. The reflecting mirror device according to any one of claims 1 to 13, wherein
the reflecting mirror has a circular shape when viewed from the optical axis direction,
the predetermined total number is a product of an arrangement circle number, which is an integer of 2 or more, and a same-radius number, which is an integer of 2 or more,
when viewed from the optical axis direction, the shape correction points of the same-radius number are arranged with rotational symmetry with a count of the same-radius number about a mirror surface center in each arrangement circle of arrangement circles of the arrangement circle number, the arrangement circle being a circle having a different radius centered on the mirror surface center, the mirror surface center being a center of the circular shape, and
each shape correction point arranged on the arrangement circle having a certain radius is arranged on a bisector of an angle formed on the mirror surface center by two line segments respectively connecting the mirror surface center to two shape correction points adjacent in a circumferential direction arranged on the arrangement circles adjacent in a radial direction of the circular shape.

15. The reflecting mirror device according to any one of claims 8 to 13, wherein
the reflecting mirror has a circular shape when viewed from the optical axis direction,
the predetermined total number is a product of an arrangement circle number, which is an integer of 2 or more, and a same-radius number, which is a multiple of 3,
when viewed from the optical axis direction, the shape correction points of the same-radius number are arranged with rotational symmetry with a count of the same-radius number about a mirror surface center in each arrangement circle of arrangement circles of the arrangement circle number, the arrangement circle being a circle having a different radius centered on the mirror surface center, the mirror surface center being a center of the circular shape,
each shape correction point arranged on the arrangement circle having a certain radius is arranged on a bisector of an angle formed on the mirror surface center by two line segments respectively connecting the mirror surface center to two of the shape correction points adjacent in a circumferential direction arranged on the arrangement circles adjacent in a radial direction of the circular shape, and
the shape correction points are respectively arranged on three straight lines connecting the mirror surface center to the respective three supported points.

16. The reflecting mirror device according to claim 14 or 15, wherein the arrangement circle number is 3, and the same-radius number is 6.

17. A reflecting mirror surface adjustment system comprising:
the reflecting mirror device according to any one of claims 1 to 16;
a wavefront sensor arranged in front of the reflecting mirror device in the optical axis direction, the wavefront sensor measuring a shape of the mirror surface; and
a mirror surface shape adjustment device to receive mirror surface shape data and control the link drive unit so that the mirror surface takes a shape as to reduce a difference from ideal mirror surface data, the mirror surface shape data being data representing the shape of the mirror surface measured by the wavefront sensor, the ideal mirror surface data being data representing a shape to be taken by the mirror surface.

18. The reflecting mirror surface adjustment system according to claim 17, wherein the mirror surface shape adjustment device includes:
a mode decomposition unit to calculate a mode decomposition result for differential shape data by weighting and superimposing to-be-suppressed Zernike modes to approximate the differential shape data, the differential shape data being a difference between the mirror surface shape data and the ideal mirror surface data, the mode decomposition result being a coefficient of the weighing;
a displacement calculation unit to determine a displacement amount in the optical axis direction at each shape correction point based on the mode decomposition result; and
a drive control unit to control the link drive unit so that each shape correction point moves by the displacement amount in the optical axis direction.

19. A reflecting mirror surface adjustment system comprising:
the reflecting mirror device according to any one of claims 8 to 13 and 15;
a wavefront sensor arranged in front of the reflecting mirror device in the optical axis direction, the wavefront sensor measuring a shape of the mirror surface; and
a mirror surface shape adjustment device to receive mirror surface shape data and control the link drive unit and the movable portion drive unit so that the mirror surface takes a shape as to reduce a difference from ideal mirror surface data, the mirror surface shape data being data representing the shape of the mirror surface measured by the wavefront sensor, the ideal mirror surface data being data representing a shape to be taken by the mirror surface.

20. The reflecting mirror surface adjustment system according to claim 19, wherein the mirror surface shape adjustment device includes:
a mode decomposition unit to calculate a mode decomposition result for differential shape data by weighting and superimposing to-be-suppressed Zernike modes to approximate the differential shape data, the differential shape data being a difference between the mirror surface shape data and the ideal mirror surface data, the mode decomposition unit being a coefficient of the weighing;
a displacement calculation unit to determine a displacement amount in the optical axis direction at each of the shape correction points and the supported points based on the mode decomposition result; and
a drive control unit to control the link drive unit and the movable portion drive unit so that each of the shape correction point and the supported point moves by the displacement amount in the optical axis direction.
